(19) Europäisches Patentamt
European Patent Office
Office européen des brevets

(11) EP 1 451 962 B1

(12) EUROPEAN PATENT SPECIFICATION

(45) Date of publication and mention of the grant of the patent:
**26.07.2006 Bulletin 2006/30**

(21) Application number: **01991813.5**

(22) Date of filing: **10.12.2001**

(51) Int Cl.:
***H04L 1/00*** (2006.01) ***H04L 25/05*** (2006.01)

(86) International application number:
**PCT/EP2001/014443**

(87) International publication number:
**WO 2003/050992 (19.06.2003 Gazette 2003/25)**

# (54) METHODS AND APPARATI FOR RATE MATCHING AND DECODING

VERFAHREN UND VORRICHTUNGEN ZUR RATENANPASSUNG UND DEKODIERUNG

PROCEDES ET APPAREILS D'ADAPTATION ET DE DECODAGE DE DEBIT

(84) Designated Contracting States:
**AT BE CH CY DE DK ES FI FR GB GR IE IT LI LU MC NL PT SE TR**

(43) Date of publication of application:
**01.09.2004 Bulletin 2004/36**

(73) Proprietor: **TELEFONAKTIEBOLAGET LM ERICSSON (publ)**
**164 83 Stockholm (SE)**

(72) Inventors:
- **SCHULIST, Matthias**
  **91052 Erlangen (DE)**
- **WACHSMANN, Udo**
  **91126 Schwabach (DE)**

(74) Representative: **Sjöberg, Mats Hakan**
**Ericsson AB**
**Torshamnsgatan 23**
**164 80 Stockholm (SE)**

(56) References cited:
**WO-A-00/22740**
**WO-A-00/41343**
**WO-A-00/64057**
**WO-A-01/05059**
**WO-A-97/38495**
**WO-A-97/45976**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 451 962 B1

## Description

### FIELD OF THE INVENTION

The present invention relates to rate matching methods and apparati for matching the size of an input data block comprising K input bits to a target block size of M bits. The invention also relates to decoding methods and apparati for decoding a received data block comprising C soft values into an output data block comprising K output bits, wherein said received data block originated from a transmitter adapted to execute one of said rate matching methods.
Furthermore, the invention relates to a transceiver of a digital communication system adapted to execute at least one of said rate matching methods and at least one of said decoding methods, as well as to a basestation of a digital mobile communication system including at least one such transceiver.
Finally, the invention relates to a computer program product directly loadable into an internal memory of a computer comprising software code portions for performing the steps of at least one of said rate matching methods and at least one of said decoding methods when the product is run on the computer.

### DESCRIPTION OF THE PRIOR ART

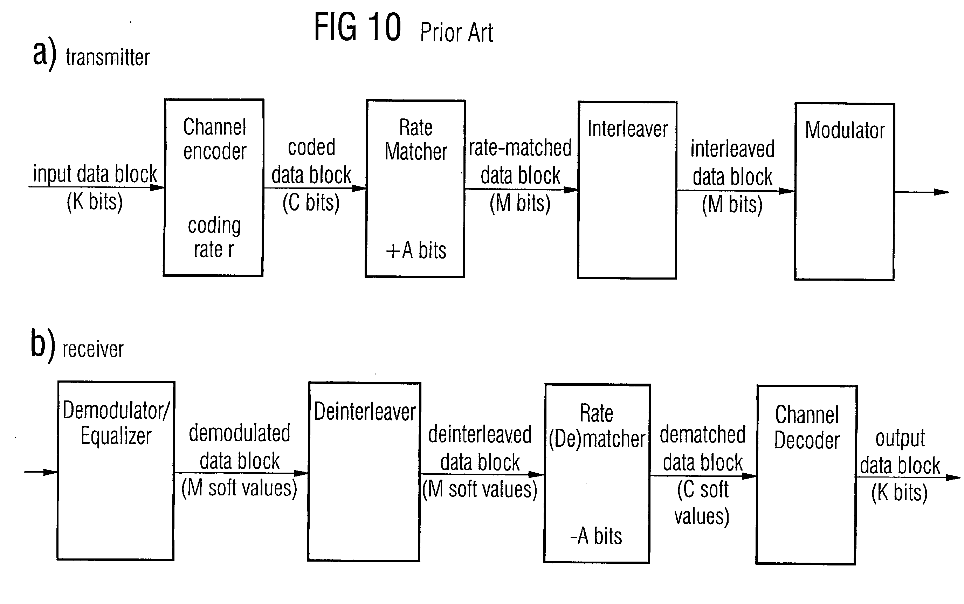

A transmitter for use in a digital telecommunication system is known, for instance, from 3GPP TS 25.212 V3.4.0 (2000-09) "3rd Generation Partnership Project; Technical Specification Group Radio Access Network; Multiplexing and channel coding (FDD) (Release 1999)", section 4.2. In Figure 10a of the present application, a block diagramme of parts of such a transmitter is given. As shown, the transmitter includes a channel encoder, a rate matcher, an interleaver, and a modulator. Further components (for frequency up-conversion, amplification etc.) are omitted for reasons of conciseness.

CHANNEL ENCODER:

The channel encoder (also referred to as forward error control encoder) adds redundant information to each incoming data block. Thereby, the size (length) of the data block increases from K "uncoded" bits, at the encoder input, to C>K "coded" bits at its output. Herein, the size C of the coded data block depends on, at least, the number K of input bits and a parameter r commonly referred to as the coding rate. With values in the range of $0<r<1$, the coding rate r provides an indication of the degree (extent, scope) of redundancy introduced by the channel encoder: the smaller the value of r, the more redundant information is added.
The way, in which redundant information is generated, depends on the channel coding scheme employed and, more particularly, on functions such as generator polynomials (with parameters such as constraint lengths, e.g.). Typical examples for channel coding schemes are convolutional coding, concatenated convolutional coding such as "turbo" coding, and block coding. The skilled person will readily appreciate that according to some channel coding schemes such as turbo coding, the coded data block (comprising C bits) may also include a number of so-called "systematic bits", i.e. bits which are identical to the (uncoded) input bits and therefore do not carry any redundant information. In this case, the other bits of the coded data block, i.e. those actually carrying redundant information, are referred to as "parity bits".
The coded data block output by the channel encoder may (or may not) include a certain number of (coded) "tail bits" also referred to as terminating bits. Tail bits are widely used in order to ensure that the encoding process terminates in a pre-defined state, e.g. in the zero state, thus providing the same degree of protection for the last input bits in the incoming data block (compared with other input bits). Similarly, tail bits ensure that the decoder in the receiver reaches a predetermined final state. In other words, tail bits ensure a proper termination of the decoder trellis.
The subsequent description is based on the assumption that tail bits are introduced by the channel encoder itself, i.e. inside the channel encoder of Fig. 10a. This assumption allows for a unified description of the relationship between the input and output block sizes which, at the same time, covers different channel encoding schemes, as will be shown in the sequel. In addition, the pure fact that the number of tail bits actually depends on properties of the channel encoder (such as the constraint length in case of convolutional coding schemes) also justifies the assumption according to which tail bits are thought of being introduced inside the channel encoder.
Certainly, a skilled person could conceive other assumptions relating to tail bits. For example, in the field of convolutional coding, the notion of appending tail bits to the data block before it is input into the channel encoder, i.e. *outside* the channel encoder, is rather common. However, this notion does not allow a generic description valid for both convolutional and, e.g., turbo coding and is therefore not used herein.
The size C of the coded data block generated by the channel encoder of Fig. 10a can be described by the equation

$$C = K/r + T \quad \text{with} \quad T \geq 0 \,, \qquad (1)$$

wherein K and r denote the number of input bits (i.e. the size of the incoming data block) and the coding rate, respectively. Note that according to the above assumption of an encoder-internal introduction of tail bits, the tail bits are not considered part of the incoming data block comprising K input bits. They are rather thought of being introduced by the channel encoder itself. In equation (1), T denotes the number of coded tail bits introduced by the channel encoder.

Equation (1) states that, out of the C bits contained in the coded data block, K/r bits result from the encoding of the incoming data block (consisting of K input bits and not including tail bits) while a total of T output bits was derived from a given number of tail bits introduced inside the channel encoder of Fig. 10a. In case of convolutional coding, a certain number of uncoded tail bits is typically encoded into a total of T coded tail bits so that equation (1) does apply to this case. With turbo coding, e.g., an internal feedback of the last encoder state ensures that the encoding process terminates in the pre-defined state. In the coded data block output by the turbo encoder, this results in a given number of (coded) tail bits so that equation (1) applies to this case, too.

In most applications, the coding rates can be described by expressions of the form r=1/x, wherein x can assume integer values greater than or equal to two. In these cases, equation (1) always delivers integer output values for C, as one would expect for a number of bits in a block. For coding rates of the general form r=y/z with positive integer parameters y and z, however, equation (1) could in principal deliver non-integer output values. However, this is a rather theoretical case, because the skilled person in the field of channel coding is aware of this problem as well as of solutions to it, such as choosing the number of bits input into the channel encoder and/or the number of (uncoded/coded) tail bits appropriately. For example, in case of a convolutional channel encoder with a coding rate of r=4/9, the skilled person would select the number of input bits and the number of uncoded tail bits so that their total number is an integer multiple of 4. This exemplary measure would ensure that C assumes a value equal to an integer multiple of 9. In the sequel, references to the size C of the coded data block (and in particular to equation (1)) assume such obvious measures for obtaining an integer number of coded output bits to have been taken.

In applications where for the same channel coding scheme several coding modes with different coding rates r have to be supported (such as r=1/2 and r=1/3, e.g.), it is rather common, in order to decrease implementational complexity and thus cost of the transmitter, to only implement a single channel encoder hardware capable of encoding at the smallest coding rate (r=1/3 in the above example). This ensures that enough redundant information is generated in a first step, *no matter* what coding mode actually has to be used. If (and whenever) a coding mode with a higher coding rate (r=1/2, e.g.) is to be performed, the excessive part of the redundant information is simply removed ("punctured") from the output of the channel encoder hardware, in a subsequent step. In the sequel, such puncturing, i.e. puncturing performed (a) after channel coding *as such,* i.e. after redundant information has been generated, and (b) for the purpose of achieving a desired (higher) coding rate, is considered part of the channel encoder, because such puncturing is essential for the channel encoder to reach its objective (channel coding at a given coding rate). It should also be noted that due to the differing purposes, such puncturing is not considered a rate matching method where the objective is to achieve a given target block size rather than a desired coding rate, as will be seen from the following description.

INTERLEAVER, MODULATOR etc.:

The purpose of the interleaver is to change the order of data bits inside each coded data block in order to ensure that a temporary disturbance during transmission of the data block (over the physical channel) does not lead to a loss of many adjacent coded data bits, since such a loss in many cases would be unrecoverable at the receiver side. Then, the modulator converts the interleaved data bits into symbols which, in general, are complex-valued. Further components, such as digital-to-analog conversion, frequency up-conversion and amplification are not shown in Fig. 10a for conciseness reasons. Finally, a signal is transmitted over the physical channel (the air interface, a wireline etc.).

The channel encoding scheme, the interleaving scheme, and the modulation scheme are specified in detail by the communication standard according to which the telecommunication system is to be operated. For example, in third generation (3G) mobile communication standards such as WCDMA (wideband code division multiple access), two channel coding schemes are specified apart from the "no coding" case: convolutional coding and turbo coding. With these coding schemes, several coding rates are to be used (r=1/2, r=1/3, and others). Also, the uncoded data blocks supplied to the channel encoder may have different sizes K. For these reasons, 3G systems will have to support many different coded data block sizes $C_i$, i=1,2,... also referred to as different "channel types", wherein the block sizes may vary over a wide range (from a hundred of bits to more than 10000 bits, e.g.). On the other hand, due to different physical channel sizes, several interleaving schemes with different interleaver sizes $M_j$, j=1,2,... may have to be supported. For example, the WCDMA standard specifies seven different interleaver sizes in the uplink and 17 in the downlink.

In order to match the channel encoder output to a given time slot and/or frame structure, several channel types with different (but maybe similar) coded data block sizes C_i should use the same interleaver (having a given size). In general, this will also be advantageous from an implementational point of view.

RATE MATCHER:

For this to become possible, a rate matcher is typically introduced between the channel encoder and the interleaver, as shown in Fig. 10a. Although it is clear from the above, that a single communication system may have to support several (or even many) combinations of coded block sizes C_i and target block sizes M_j, the following generic description is based, for simplicity and clarity reasons, on a single combination of a coded block size C and a target block size M. The rate matcher shown in Fig. 10a either adds (inserts) to each coded data block or deletes (removes, "punctures") from each coded data block a certain number of bits in order to obtain a rate-matched data block having a given target block size of M bits (which is, e.g., the size of an interleaver or a particular block length required for transmission). For this purpose, the rate matcher has to add M-C bits to the coded data block, if C is inferior to M, or to remove (puncture) C-M bits therefrom, if C is superior to M, so as to adapt the block size C to said target block size M. In cases where M is equal to C, no adjustment in size is necessary, of course. With the definition

$$A = M - C \qquad (2)$$

the functionality of the rate matcher can be described as adjusting the size of the coded data block by a number |A| of bits with |A| denoting the magnitude of A, wherein for A>0 (i.e. C<M) the rate matcher adds A bits to the coded data block, while for A<0 (i.e. C>M), it removes |A|=-A=C-M bits therefrom. In case of A=0 (i.e. M=C), obviously, no adjustment in size is required.

Although in principle, the bits to be added (inserted) in case of A>0 could have any value, the receiver performance can be improved if bits of the coded data block are repeated instead of, e.g., adding bits with fixed values. For this reason, typically, the expression "adding A bits" is equivalent in meaning to "repeating" said number of bits. Herein, the expression "repeating A bits" is used in a gereralized form. On the one hand, it can mean that each bit out of a total of *A different bits* is repeated once. On the other hand, it can also mean that *fewer different bits* are repeated *more often.* At the limit, it can mean that only *one bit* is repeated *A times.* Nevertheless, in all of these repetition schemes, it can be stated that in the rate-matched data block, A bits represent copies of one to A "original" bits contained in the coded data block. As long as not all C bits of the coded data block are repeated the same number of times, these repetition schemes are referred to as "unequal repetition" schemes.

It should be noted that, depending on the application under consideration, the parameter A can assume rather high values (in the hundreds or even thousands of bits). This can lead to a considerable implementational complexity, because for each bit to be repeated or deleted, its position inside the coded data block, along with the number of repetitions (if applicable), has to be determined or stored both in the transmitter and in the receiver, as will be seen below.

Figure 10b shows a block diagramme of parts of a receiver for receiving a data block originating from a transmitter according to Figure 10a.

DEMODULATOR/EQUALIZER, DEINTERLEAVER etc.:

Upon filtering, down-conversion and analog-to-digital conversion (not shown), a demodulator/equalizer converts the received symbols back to data bits. However, instead of generating "hard" bits (which can only assume values of either zero or one), so-called "soft output" demodulators/equalizers such as RAKE demodulators or soft output Viterbi algorithm (SOVA) equalizers are capable of providing reliability information in the form of "soft values" (sometimes also referred to as "soft output values", "soft 'bits'", and "metric values") which can assume non-integer values, too. For example, a soft value of 1.0 could represent a secure one (i.e. the soft output demodulator considers the bit a one with the highest reliability level) while a soft value of 0.5 could represent a less reliable one. Similarly, a soft value of -1.0 could stand for a secure zero while a soft value of -0.5 could represent a less reliable zero. In this example, a soft value of 0.0 would imply that no preference can be given as to whether the bit is a one or a zero (0.0 thus being the "don't know" soft value). Depending on the number of bits used to represent each soft value, more or less levels in between the soft value for the "secure one" (1.0 in the example above) and the soft value for the "secure zero" (-1.0 in the example above) can be represented so that the reliability information is given with more or less accuracy. In the following, it is assumed that the demodulator is capable of generating soft values, because higher performance levels are possible using soft values. However, this also includes the case of a hard demodulator, where the "soft values" are represented by a single bit only and thus no reliability information is generated in fact.

Upon demodulation/equalization, the demodulated data block comprising M soft values (corresponding to the M bits in the interleaved data block of Fig. 10a) is deinterleaved by the deinterleaver, as shown in Figure 10b. The deinterleaver changes the order of the M soft values in the demodulated data block in accordance with an algorithm which is the inverse of the interleaving scheme used by the interleaver in the transmitter (cf. Fig. 10a). In the deinterleaved data block, the M soft values thus follow each other in the same order as the M bits of said rate-matched data block did prior to interleaving in the transmitter.

RATE (DE)MATCHER, CHANNEL DECODER:

While the rate matcher in the transmitter (cf. Fig. 10a) adjusts the size of the incoming (coded) data block from C to M bits, the rate (de)matcher in the receiver does adjust the size of the incoming (deinterleaved) data block from M to C soft values, as shown in Figure 10b. In case the rate matcher in the transmitter has repeated A=M-C>0 bits, the rate (de)matcher in the receiver combines those soft values of the deinterleaved data block, which correspond to the same (i.e. the original coded bit plus the copy/copies thereof) bits in the rate-matched data block, into a single soft value and thus reduces the size of the deinterleaved data block by a total number of A soft values. Such techniques are referred to as *soft value combining* techniques. Herein, soft values can be combined, for instance, by averaging, by averaging weighted soft values, or by selecting the most reliable soft value taking into account noise measures (SNR values, e.g.) associated with the soft values. The latter soft value combining technique is also referred to as selective combining. However, in case the rate matcher in the transmitter has deleted -A=C-M>0 bits, the rate (de)matcher in the receiver inserts "don't know" soft values (i.e. soft values corresponding to the lowest reliability level, in the above example 0.0) at the |A| positions where in the transmitter bits were deleted. In this way, a "dematched" data block comprising C soft values (corresponding to the C bits in the coded data block of Fig. 10a) is obtained in both cases. This dematched data block is then channel decoded by the channel decoder (also referred to as forward error control decoder) according to a soft input decoding scheme (which realizes the inverse of the channel coding scheme applied at the transmitting side), into an output data block comprising K (hard) output bits which, provided that no bit errors occurred, are identical to the K input bits of the input data block as input to the channel encoder of Fig. 10a. Examples for soft input decoding schemes are maximum a-posteriori (MAP) algorithms or variants thereof (Log-MAP, Max-Log-MAP methods etc.).

With the knowledge of the positions inside each coded (or rate-matched) data block, where bits were repeated or deleted by the rate matcher in the transmitter, the receiver thus is able to reconstruct an output data block comprising K bits from the deinterleaved data block having M soft values.

As stated above, in case of unequal repetition at the transmitting side, a combining gain (diversity gain) can be obtained at the receiving side by soft value combining. This gain is due to noise/interference reduction. When a transmission is to be executed with a given "Quality of Service" (at an operating point with, e.g. particular bit or frame error rate requirements), this gain is equivalent to a reduced signal-to-noise/interference ratio requirement.

However, just as the other coded bits, the repeated coded bits are usually exposed to distortion and noise on the transmission channel (multipath radio channel etc.). The combined effect of distortion and noise usually reduces the maximum possible diversity gain.

In the published international patent application WO00/22740 A1, a method for channel coding by use of an outer block coding and an inner coding is disclosed. The channel coding is divided into two parts. The outer coding has a coding rate, which is allowed to be adjusted. The inner coding has a coding rate which typically is constant. In order to match a requested transmission rate, the coding rate of the outer coding is adjusted to give at most a small discrepancy. The small remaining discrepancy is handled by insertion/removing of bits in the encoded data block.

In the published international patent application WO97/38495 A1, a method for convolutive encoding of blocks is disclosed. Each of the data blocks are formed by a predetermined number N of source data elements. If the original data does not comply with this, fill bits are added prior to the coding. However, the input number of bits to the encoder is always fixed to a predetermined number, and so is the number of bits in the encoded data block.

In the published international patent application WO00/64057 A1, a segmentation method is disclosed. A long data block is divided into data blocks smaller or equal to a maximum block size accepted by an encoder.
The data blocks are of the same size except perhaps for the last one. If the size of the last divided block is smaller than the rest it is preferable to fill up the block by fill bits to the same length as the rest of the data blocks.

In the published international patent application WO00/41343 A1, a puncturing scheme is disclosed. This puncturing scheme is to be applied after a turbo encoder. The encoded data resulting from the turbo encoder is thereby adjusted in size to fit to a requested transmission rate.

## SUMMARY OF THE INVENTION

In view of the above, it is a first object of the invention to develop an improved rate matching method and apparatus (for matching the size of an input data block comprising K input bits to a target block size of M bits) which, when applied to a. transmitter of a digital communication system, enable a receiver of said system to achieve a superior performance (higher gain) compared with the case of unequal bit repetition after channel encoding and soft value combining before channel decoding.
It is a second object of the invention to develop an improved decoding method and apparatus (for decoding a received data block comprising C soft values into an output data block comprising said number K of output bits, wherein said received data block originated from said improved transmitter and was referred to as "dematched" data block in the above description of the prior art with respect to Fig. 10b) which, when applied to said receiver, allow for said superior performance.
Furthermore, the improved rate matching and decoding methods/apparati should reveal a low complexity.

First aspect:

According to a first aspect of the present invention, the first object is achieved by the rate matching method of claim 1. In particular, the object is achieved by a step of inserting (adding) a number N (an integer value greater than zero) of so-called "fill bits" with predetermined values into said input data block (comprising K input bits), thereby'creating an uncoded data block (comprising K+N bits) to be channel encoded in the subsequent step of channel encoding. In other words, fill bits are inserted into the data stream *prior to (before) the step of channel encoding.*
Equivalently, this object is achieved by the rate matching apparatus of claim 15. In particular, this apparatus includes a "fill bits insertion unit" for inserting (adding) said number (N) of fill bits with predetermined values into said input data block, thereby creating said uncoded data block to be channel encoded by the channel encoder. Viewed in the direction of the data stream, said fill bits insertion unit thus::is located in *front of the channel encoder.*
By inserting a number N>0 of fill bits into the data stream before channel encoding (claim 1) and *in front of* the channel encoder (claim 15), respectively, a superior performance (higher gain) can be achieved in the receiver compared with unequal bit repetition after channel encoding/behind the channel encoder, because the fill bits are channel coded prior to transmission and therefore (better) protected against disturbances on the physical channel just as the other (K) input bits (information bits, payload bits, user bits etc): For the meaning of expressions such as "before/after the step of channel encoding" and "in front of/behind the channel encoder", it is important to make assumptions on the scope (extent) of the channel coding step and the channel encoder, respectively. For such assumptions, reference is made to the above section related to the

prior art.

It is important to note that the first object of the invention (as stated above) is achieved by the features of claims 1 and 15 independent from the actual channel encoding scheme employed, i.e. independent from the question whether a systematic or a non-systematic scheme is employed, independent from the question whether a convolutional, a turbo etc. scheme is employed, and independent from the actual generator polynomial(s) and/or the actual values of other coding parameters etc.

Second aspect:

According to a second aspect of the present invention, the first object is achieved by the rate matching method of claim 3. In particular, the object is achieved by including, into the step of channel encoding, a first substep of generating so-called "parity bits" from the (K+N) bits contained in said uncoded data block (including said fill bits), a second substep of removing, from the (K+N) bits contained in said uncoded data block, said N fill bits inserted according to the first aspect of the invention, thereby generating (K) modified systematic bits, and a third substep of assembling the coded data block based on, at least, said parity bits and said modified systematic bits (and possibly a number of coded tail bits). Herein, the parity bits (as opposed to the modified systematic bits) are the bits carrying the redundant information, as explained above with respect to the prior art.
Equivalently, this object is achieved by the rate matching apparatus of claim 17. In particular, the object is achieved by a channel encoder adapted to execute the first, second, and third substeps as described above.
According to this aspect of the invention, the fill bits which have been inserted into the data stream in said inserting step/ fill bits insertion unit, i.e. before channel encoding/in front of the channel encoder, are removed again from those bits which are not to be used for the generation of parity bits; while they remain in the data block used for the generation of parity bits. In other words, fill bits do only remain in those paths of channel encoding/the channel encoder where, as a matter of fact, redundant information is generated (in the form of parity bits), while fill bits are suppressed (and thus not transmitted) in "systematic" paths thereof, where no redundant information is generated anyway (for a definition of the term "systematic", please refer to the above section on the prior art). Simulation results, some of which will be provided below, have shown that in case of channel encoders including such systematic paths, such as turbo encoders or systematic convolutional encoders, the receiver performance (gain) achieved in this way can even be higher than the gain achieved according to the first aspect of the invention.

Third aspects :

According to a third aspect of the present invention, the first object is achieved by the rate matching method of claim 2. In particular, the object is achieved by including, into the step of channel encoding said input data block (comprising K input bits), a first substep of inserting (adding) a number N (an integer value greater than zero) of fill bits with predetermined values into said input data block, thereby creating an uncoded data block (comprising K+N bits) to be further processed in a second substep of generating parity bits (as defined above with respect to the second aspect of the invention) from the bits contained in said uncoded data block, and a third substep of assembling the coded data block based on, at least, said parity bits and systematic bits which are identical to the bits contained in said input data block (and possibly a number of coded tail bits). In other words, fill bits are inserted into the data stream *during the step of channel encoding.*

Equivalently, this object is achieved by the rate matching apparatus of claim 16. In particular, the object is achieved by a channel encoder adapted to execute the first, second, and third substeps as described above. In other words, fill bits are inserted in a (sub)step executed by the channel encoder, i.e. *inside the channel encoder.*

By inserting a number N>0 of fill bits into the data stream during channel encoding (claim 2) and *inside* the channel encoder (claim 16), in case of channel coding/channel encoders including systematic paths, a superior performance (higher gain) can be achieved in the receiver compared with unequal bit repetition after channel encoding/behind the channel encoder, because the fill bits are channel coded prior to transmission and therefore (better) protected against disturbances on the physical channel just as the other (K) input bits (information bits, payload bits, user bits etc). For the meaning of expressions such as "during/after the step of channel encoding" and "inside/behind the channel encoder", it is important to make assumptions on the scope (extent) of the channel coding step and the channel encoder, respectively. For such assumptions, reference is made again to the above section related to the prior art.

Functionally, the second and third aspects of the invention are identical so that, in fact, the gain achievable in the receiver is the same no matter whether in the transmitter the second or the third aspect of the invention was used. This is due to the fact that, in both cases, fill bits are effectively not taken into account for the generation of the systematic output bits generated in the channel coding step/by the channel encoder so that, in both cases, the same bits will be transmitted to the receiver.

It is important to note that the first object of the invention (as stated above) is achieved by the features of claims 2, 3 and 16, 17 independent from the actual *systematic* channel encoding scheme employed, i.e. independent from the question whether a convolutional, a concatenated convolutional etc. scheme is employed and independent from the actual generator polynomial(s). and/or the actual values of other coding parameters etc., as long as the encoding scheme is systematic.

The insertion of N>0 fill bits according to any of the claims 1-3 and 15-17 will of course result in an increased size (length) C > K/r+T of the coded data block. In analogy with equation (1), the increased size can be described by the equations (wherein the definitions and assumptions stated in the above section on the prior art apply here in an analogous manner. In particular, it is assumed that integer output values are ensured for these equations by obvious measures such as an appropriate selection of the values of K, N, and/or the number of [uncoded or coded] tail bits)

$$C(N) = (K+N)/r + T \quad \text{[first aspect]}, \qquad (3a)$$

$$C(N) = (K+N)/r - N + T \quad [2^{nd}/3^{rd} \text{ aspects}], \qquad (3b)$$

wherein the term C(N) indicates that C is a function of the number N of fill bits. Note that for N>0, we have C(N)>C(0), wherein C(0)=K/r+T=C (cf. eq. (1)). As a consequence of the increase in size, the difference between the target block size M and the size of the coded data block, i.e. the value of (cf. equation (2))

$$A(N) = M - C(N) \qquad (4)$$

will decrease. Depending on the number N of inserted fill bits, the value of A(N) may vanish (for C(N)=M) or even fall below zero (for C(N)>M). If according to the prior art (i.e. without inserting fill bits: N=0), bits had to be repeated in the adjusting step/unit, then, depending on the reduced value of A(N), fewer or no bits will have to be repeated in said adjusting step/unit as a consequence of the application of fill bits. For negative values of A(N), it will even be necessary to remove bits in said adjusting step/unit as a consequence of the application of fill bits, although without fill bits, bits may have had to be repeated in said step/unit. Finally, if bits had to be removed (deleted, "punctured") without applying fill bits, more bits will have to be removed as a consequence of the insertion of fill bits.

It is important to note that the first object of the invention (as stated above) is achieved by the features of claims 1-3 and 15-17 independent from the value of the number N of fill bits, as long as at least one fill bit is inserted prior to or during channel encoding (N>0). This is because the insertion of any positive number of fill bits can improve the receiver performance (the gain mentioned above) compared with the prior art, according to which the target block size M has to be reached by unequal bit repetition (after channel encoding) alone, i.e. with N=0. When increasing the number N of fill bits to higher values, it is clear that, at some point, the receiver performance will level off. However, it will in general not fall to (or even below) the level of the prior art performance, as long as some simple rules which are well-known to the skilled person are observed (such as: try to avoid puncturing coded input data bits, rather puncture coded fill bits). An increase in performance with respect to the prior art can thus be obtained for any positive number of fill bits.

Likewise, it is important to note that the first object of the invention (as stated above) is achieved by the features of claims 1-3 and 15-17 independent from the actual values of said N fill bits and independent from the positions in the input data block where said N fill bits are actually inserted.

According to the present invention, the number N of fill bits to be inserted before or during channel coding depends on, at least, the target block size M, which, according to the above description of the prior art, can be the size of an interleaver and/or a block length required in order to meet a given time slot and/or frame structure for transmission. This feature mainly provides implementational advantages with respect to complexity. By selecting the number N of fill bits in dependence of the target block size M, the complexity of the adjusting step/unit can be controlled.
For example, it can be made sure that for given values of K and r, only bit repetition has to be taken into 1 account when implementing the adjusting step/unit. Likewise, it can be ensured that only bit removal (puncturing) needs to be implemented. As another example, for a given implementation of the channel encoding step/the channel encoder, selecting N as a function of M can reduce the complexity of the adjusting step/unit. Such measures reduce the overall complexity of the rate matching method/apparatus.

Preferably, the number N of fill bits is selected according to claims 5 and 19, i.e. such that the (resulting, i.e. increased) size C(N) of said coded data block (still) is smaller than, or at most equal to, said target block size M. In other words, the number N of fill bits should be selected from the range $0 < N \leq N0$, wherein N0 denotes the highest number of fill bits still resulting in a size C(N0) meeting the condition $C(N0) \leq M$.

Advantageously, such a choice will result in a reduced complexity of the adjusting step/unit, because it ensures that for the implementation of the adjusting step/unit, it is not necessary to take into account the bit removal (puncturing) case. At most, it will be necessary to implement the case of bit repetition. More precisely, it will at most be required to implement a residual form of bit repetition, i.e. the repetition of a smaller number of bits compared with the prior art. Given the fact that, as stated above with respect to the prior art, for each bit to be repeated, its position inside the coded data block, along with the number of repetitions (if applicable), has to be determined or stored both in the transmitter and in the receiver, it is clear that the above selection of the number of fill bits can lead to a considerable reduction in implementational complexity. Finally, in case of A(N)=0 (i.e. C(N)=M), there is even no need at all to implement the adjusting step/unit.

Preferably, the number N of fill bits is selected according to claims 4 and 18, i.e. such that the (resulting, i.e. increased) size C(N) of said coded data block (still) is inferior to the sum of said target block size M and the inverse 1/r of said coding rate r. In other words, the number N of fill bits should.be selected from the range $0 < N \leq N1$, wherein N1 denotes the highest number of fill bits still resulting in a size C(N1) meeting the condition $C(N1) < M + 1/r$. A selection of N according to this criterion provides the advantage that a specific (given or required) performance level (which, according to the above, is higher than the prior art performance) can be achieved in the receiver at the lowest possible complexity. This can be seen from the following observation. When first looking at the performance level achieved by the insertion of a single fill bit (N=1) and then increasing the number N of fill bits to higher values n>1, it can in general be stated that:N=n fill bits will lead to a higher performance level than N=n-1 fill bits. In other words, each additional fill bit will in general contribute an individual increase (delta) in performance (as noted above, each additional fill bit will of course also add an individual delta in complexity). However, at a certain total number (n=N1) of fill bits, no further increase in performance will be possible in general: Beyond this number (N>N1), an additional fill bit will no longer (necessarily) result in an increased performance relative to the level at N-1 fill bits while it will still add to the overall complexity. For this reason, the above selection of the number of fill bits provides an advantageous compromise between performance and complexity requirements.

Preferably, the number N of fill bits also depends on at least the coding rate r and the number K of input bits (in addition to the target block size M). This advantageously allows to determine values for N based on the parameters r, K, and M which ensure a near-optimum increase in receiver performance as compared with the prior art.

With the first aspect of the invention, the number N of fill bits is advantageously selected according to claim 6, i.e. so as to be essentially equal to

$$N' = r*(M-T) - K \qquad \text{[first aspect]}, \qquad (5a)$$

wherein T denotes the number of coded tail bits used for trellis termination, as described above with respect to the prior art. T can assume non-negative integer values.

With the second and third aspects of the invention, the number N of fill bits is advantageously selected according to claim 7 i.e. so as to be essentially equal to

$$N'' = (r*(M-T) - K)/(1-r) \qquad [2^{nd}/3^{rd} \text{ aspects}], \qquad (5b)$$

wherein the same definition of T applies.

By selecting N essentially equal to

- N' according to equation (5a) [first aspect] or
- N" according to equation (5b) [$2^{nd}/3^{rd}$ aspects],

the number of bits to be repeated or removed in the respective adjusting step can be limited to small numbers. It can be shown that these selections of:values for N ensure that at most 1/r bits need to be repeated or removed in the respective adjusting step, i.e. A(N) (as defined according to eq. (4)) will be in the range of $-1/r \leq A(N) \leq 1/r$. Given the fact that N' and N" may or may not assume integer values, the expression "essentially equal to ..." is to be understood in the sense of "equal to integer values adjacent to ...". While complexity is thus reduced, claims 6 and 7 ensure a near-optimum performance by selecting a rather high number of fill bits.

Preferably, the number N of fill bits is chosen according to claim 8, i.e. equal to one of

- round{N'}, floor{N'}, and ceil{N'} [first aspect], or
- round {N"}, floor{N"}, and ceil{N"} [$2^{nd}/3^{rd}$ aspects],

where N' and N" are defined in equations (5a) and (5b), respectively. Herein, "floor{}" denotes a.flooring operation delivering the greatest integer value smaller than or equal to its argument, while "ceil{}" denotes a ceiling operation delivering the smallest integer value greater than or equal to its argument.

The "round" operations ensure minimisation of the number of bits to be repeated or removed in the respective adjusting step (i.e. minimisation of |A(N)|). It can be shown that the round operations make sure that less than 1/r bits need to be repeated or removed in the respective adjusting step, i.e. A(N) will be in the range of $-1/r < A(N) < 1/r$. On the other hand, the "floor" and "ceil" operations ensure minimisation of |A(N)| on the condition that the respective adjusting step may include only one of bit repetitions and bit removals, if required at all. In case of the floor operations, it is ensured that only bit repetitions may be required (if at all) in the adjusting step, while the ceil operations make sure that at most bit removal may become necessary. By selecting the highest possible number of fill bits, the optimum performance is thus ensured while taking into account boundary conditions targeted to reduce implementational complexity.

Preferably, the N fill bits are inserted (placed) at at least two non-adjacent positions and at essentially equidistant positions, respectively, into said input data block comprising K input bits.

According to claims 9 and 10, the N fill bits are inserted (placed) in groups (consisting of at least two fill bits each) into said input data block comprising K input bits. Upon grouping (dividing) said N fill bits into groups in a first substep, at least two groups are inserted at non-adjacent positions (claim 9) and at least three groups are inserted at essentially equidistant positions (claim 10), respectively, in a second substep.

As far as claim 10 is concerned, the skilled person will readily appreciate that depending on the values of K and N, it may or may not be possible and/or desirable to place the fill bits or groups thereof at *exactly* equidistant positions (for example, when it turns out that every "4.5" bits a fill bit or a group of fill bits should be inserted, or because it may prove disadvantageous to insert a fill bit or a group of fill bits at the very beginning or the very end of the input data block). Therefore, slight deviations from exact equidistance may be advantageous.

Simulation results, some of which will be provided below, have shown that the insertion of fill bits at positions according to the claims 9-10 has an advantageous effect on the receiver performance.

In accordance with all aspects of the invention described above, the fill bits are bits with predetermined values which, typically, do not depend on the data to be transmitted (information bits, payload bits, user bits etc.), i.e. on the values of the K input bits. For instance, the fill bits can (all) have a value of zero. Alternatively, they could (all) have a value of one or any other pattern of zeros and ones. If the fill bits are inserted in groups according to claims 9 or 10, the values of the fill bits of at least one of said groups can be selected so as to enforce specific states in an encoder/decoder trellis, as provided for in claim 11.

Simulation results, some of which will be provided below, have shown that the selection of the values of the fill bits according to claim 11 can have an advantageous effect on the receiver performance.

If the step of channel encoding includes a step of turbo coding, a substep of turbo interleaving with an increased interleaving length can be included into said : turbo coding step. Increasing the interleaving length (size of the turbo code interleaver) will in general improve the receiver performance.

Fourth aspect:

According to a fourth aspect of the present invention, the second object is achieved by the decoding method of claim 12. In particular, when N>0 fill bits have been inserted at the transmitting side according to the first aspect of the invention, the second object is achieved by a first step of channel decoding said received data block comprising C soft values (in the above description of the prior art with respect to Fig. 10b, said received data block is referred to as "dematched" data block), thereby creating a decoded data block comprising said K output bits and said number N of decoded fill bits corresponding to said (N) fill bits, followed by a second step of removing (deleting, puncturing) said (N) decoded fill bits from said decoded data block, thereby creating said output data block comprising said K output bits. In other words, the fill bits which were inserted into the data stream before channel encoding at the transmitting side are removed again after channel decoding at the receiving side.

Equivalently, the second object is achieved by the decoding apparatus of claim 20. In particular, this apparatus includes a "decoded fill bits removal unit" for removing (deleting, puncturing) said (N) decoded fill bits from said decoded data block, thereby creating said output data block. Viewed in the direction of the data stream, said decoded fill bits removal unit thus is located *behind the channel decoder.*

By inserting, at the transmitting side, N fill bits before channel encoding (first aspect of invention), and by removing, at the receiving side, the N decoded bits corresponding to said N fill bits after channel decoding (fourth aspect), a superior performance (higher gain) is achieved in the receiver compared with unequal bit repetition after channel encoding at the transmitting side and soft value combining before channel decoding at the receiving side, because the fill bits are channel coded prior to transmission (and decoded thereafter) and therefore (better) protected against disturbances on the physical channel just as the other (K) input bits (information bits, payload bits, user bits etc). For the meaning of expressions such as "before/after channel decoding" and "in front of/behind the channel decoder", it is important to make assumptions on the scope (extent) of the channel decoding step and.the channel decoder, respectively. Here, it is assumed that at the receiving side the same scope applies as at the transmitting side. For assumptions relating to the transmitting side, reference is made to the above; section on the prior art.

It is important to note that the second object of the invention (as stated above) is achieved by the features of claims 12 and 20 independent from the actual channel encoding scheme applied at the transmitting side (while it is obvious that the inverse functionality-is to be realized at the receiving side), i.e. independent from the question whether a systematic or a non-systematic scheme is employed, independent from the question whether a convolutional, a turbo etc. scheme is employed, and independent from the actual generator polynomial(s) and/or the actual values of other coding parameters etc.

Fifth aspect:

According to a fifth aspect of the present invention, the second object is achieved by the decoding method of claim 13. In particular, the object is achieved by including, into the step of channel decoding, a first substep of disassembling said received (dematched) data block into, at least, a first group of soft values corresponding to systematic bits and a second group of soft values corresponding to parity bits (and possibly a third group of soft values corresponding to coded tail bits), a second substep of replacing N soft values of said first group with N soft values representing the highest reliability level (1.0 or -1.0 in the example presented in the section on the prior art) for each corresponding (predetermined) value (1 or 0, respectively) of said N fill bits, thus generating a modified first group of soft values, and a third substep of soft input decoding at least said modified first group of soft values and said second group of soft values (and possibly said third group of soft values), thereby creating said decoded data block. Herein, the terms "systematic bits", "parity bits", and "tail bits" refer to the respective kind of bits as generated in the channel encoding step at the transmitting side and as explained above with respect to the prior art.
Equivalently, the second object is achieved by the decoding apparatus of claim 21. In particular, the object is achieved by a channel decoder adapted to execute the first, second, and third substeps as described above.
According to this aspect of the invention, out of the "systematic soft values" contained in said received data block (first group of soft values), i.e. out of those soft values corresponding to systematic bits in the coded data block), a total of N soft values (those corresponding to said N fill bits) are replaced with soft values representing the highest reliability level. In the example described above with respect to the prior art, this would mean that a systematic soft value corresponding to a fill bit is replaced with a soft value of 1.0 (secure one) if the value of the corresponding fill bit was 1, and with a value of -1.0 (secure zero) if the value of the corresponding fill bit was 0. Note that such a replacement of systematic soft values is feasible because the values and the positions of the N fill bits are known at the receiving side.
However, such a replacement is possible only if a systematic channel encoding scheme as well as the first aspect of the invention is used at the transmitting side. In other words, systematic fill bits must actually be transmitted over the physical channel in order for said replacement of systematic soft values to become possible. Simulation results, some of which will be provided below, have shown that in case of systematic channel encoding (and thus decoding) schemes, such as turbo or systematic convolutional schemes, the receiver performance (gain) achieved in this way can even be higher than the gain according to the fourth aspect of the invention.

Sixth aspect:

According to a sixth aspect of the present invention, the second object is achieved by the decoding method of claim 14. In particular, when N>0 fill bits have been inserted at the transmitting side according to the second or third aspect of the invention, the second object is achieved by a step of channel decoding and a removing step according to the fourth aspect of the invention as described above, wherein said step of channel decoding includes a first substep of disassembling said received ("dematched") data block into, at least, a first group of soft values corresponding to systematic bits and a second group of soft values corresponding to parity bits (and possibly a third group of soft values corresponding to coded tail bits), a second substep of inserting (adding), into said first group of soft values, N soft values representing the highest reliability level (1.0 or -1.0 in the example presented in the section on the prior-,art) for each corresponding (predetermined) value (1 or 0, respectively) of said N fill bits, thus generating a modified first group of soft values, and a third substep of soft input decoding at least said modified first group of soft values and said second group of soft values (and possibly said third group of soft values), thereby creating said decoded data block. Herein, the terms "systematic bits", "parity bits" and "tail bits" refer to the respective kind of bits as generated in the channel encoding step at the transmitting side and as explained above with respect to the prior art. Equivalently, the second object is achieved by the decoding apparatus of claim 22. In particular, the object is achieved by a channel decoder adapted to execute the first, second, and third substeps as described above.
According to this aspect of the invention, N soft values representing the highest reliability level are inserted (added) into the "systematic soft values" contained in said received data block (first group of soft values), i.e. into those soft values corresponding to systematic bits in the coded data block. Note that such an insertion of "secure one" and "secure zero" soft values is feasible because the positions where the N fill bits were inserted at the transmitting side are known to the receiver. As, according to the second and third aspects of the invention, no systematic fill bits are actually transmitted, the soft values corresponding to these systematic fill bits are "missing" at the receiving side so that additional soft values must be added to the other systematic soft values at the positions corresponding to the positions where at the transmitting side, fill bits were inserted into the input data block. Since the values and the positions of the fill bits are known at the receiving side (although they are not transmitted over the systematic encoder path), "secure one" soft values can be inserted at the positions corresponding to fill bits having a value of 1 and "secure zero" soft values can be added at the positions corresponding to zero value fill bits. Simulation results, some of which will be provided below, have shown that the receiver performance (gain) achieved in this way can even be higher than the gain according to the fifth aspect of the invention.

It is important to note that the second object of the invention (as stated above) is achieved by the features of claims 13, 14 and 21, 22 independent from the actual *systematic* channel encoding scheme applied at the transmitting side (while it is obvious that the inverse functionality is to be realized at the receiving side), i.e. independent from the question whether a convolutional, a concatenated convolutional etc. scheme is employed and independent from the actual generator polynomial(s) and/or the actual values of other coding parameters etc., as long as the encoding scheme is systematic.

Seventh to tenth aspect:

According to a 7th aspect of the present invention, the first and second objects are achieved by the transceiver of claim 22. In particular, the objects are achieved by a transceiver adapted to execute the rate matching method according to the first aspect of the invention as well as the decoding method according to the fourth or fifth aspect of the invention.

According to a 8th aspect of the present invention, the first and second objects are achieved by a transceiver adapted to execute the rate matching method according to the second or third aspect of the invention as well as the decoding method according to the sixth aspect of the invention.

According to a 9th aspect of the present invention, the first and second objects are achieved by the basestation of claim 24. In particular, the objects are achieved by a basestation of a digital mobile communication system including at least one transceiver according to the 7th or 8th aspect of the invention.

According to a 10th aspect of the present invention, the first and second objects are achieved by the computer program product of claim 25. In particular, the objects are achieved by a computer program product directly loadable into an internal memory of a computer comprising software code portions for performing a rate matching method according to at least one of the first, second and third aspects of the invention as well as for performing a decoding method according to at least one of the fourth, fifth and sixth aspects of the invention when the product is run on a computer.

## DESCRIPTION OF THE DRAWINGS

Preferred embodiments of the present invention will, by way of example, be described in the sequel with reference to the following drawings.

Fig. 1: Block diagramme of a radio communication system;

Fig. 2: Block diagramme of a transceiver used in mobile terminals and basestations of a radio communication system

Fig. 3a: Block diagramme of a rate matching apparatus including a fill bits insertion unit according to the invention in front of the channel encoder ("mode a");

Fig. 3b: Flow chart of a rate matching method including a step of inserting fill bits according to the invention prior to channel encoding ("mode all);

Fig. 4a: Block diagramme of a rate matching apparatus including a fill bits insertion unit in front of the channel encoder and a fill bits removal unit within the channel encoder according to an embodiment of the invention ("mode b");

Fig. 4b: Flow chart of a rate matching method including a step of inserting fill bits prior to channel encoding and a step of removing fill bits during channel encoding according to an embodiment of the invention ("mode b");

Fig. 5a: Block diagramme of a rate matching apparatus including a fill bits insertion unit within the channel encoder according to an embodiment of the invention ("mode b"):

Fig. 5b: Flow chart of a rate matching method including a step of inserting fill bits during channel encoding according to an embodiment of the invention ("mode b");

Fig. 6a: Block diagramme of a decoding apparatus including a decoded fill bits removal unit according to the invention behind the channel decoder and, optionally, a soft values replacement unit within the channel decoder ("mode a");

Fig. 6b: Flow chart of a decoding method including a step of removing decoded fill bits according to the invention after channel decoding and, optionally, a step of replacing soft values during channel decoding ("mode a");

Fig. 7a: Block diagramme of a decoding apparatus including a decoded fill bits removal unit behind the channel decoder and a soft values insertion unit within the channel decoder according to an embodiment of the invention ("mode b");

Fig. 7b: Flow chart of a decoding method including a step of removing decoded fill bits after channel decoding and a step of inserting soft values during channel decoding according to an embodiment of the invention ("mode b");

Fig. 8: Simulation results for a WCDMA packet service (UDD144) on an uplink "vehicular A" (120km/h) scenarios

Fig. 9: Simulation results for a WCDMA packet service (64 kbit/s) on a downlink "outdoor to indoor (pedestrian) B" (3km/h) scenario;

Fig. 10 Block diagramme of a transceiver according to the prior art.

## DETAILED DESCRIPTION OF THE INVENTION

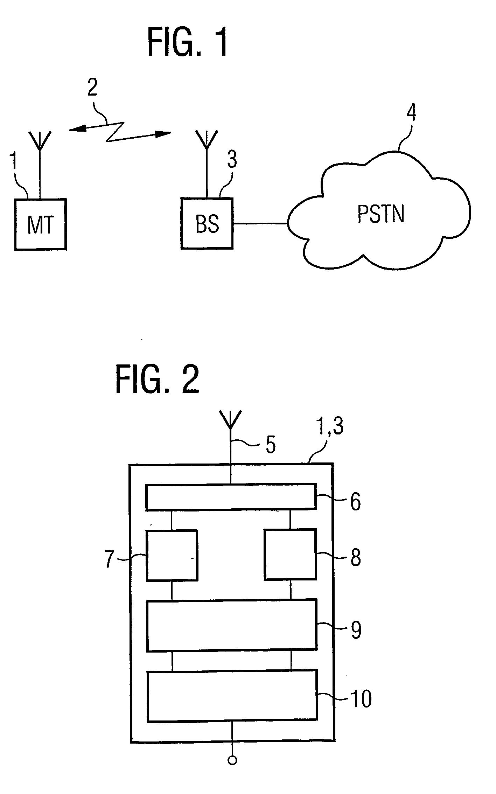

Fig. 1 shows a digital radio telecommunication system according to the invention. A typical application of such a system is to connect a mobile station or mobile terminal (MT) 1 to a core network such as the public switched telephone network (PSTN) 4. For this purpose, the mobile terminal 1 is connected to a base station (BS) 3 via a radio link 2. The radio telecommunication system provides a plurality of base stations which, through other network nodes such as controllers, switches and/or gateways (not shown) are connected to the PSTN 4. Each base station typically supports, at any one time, many radio links 2 towards different mobile terminals 1. The radio telecommunication system shown in Fig. 1 could for instance be operated according to cellular mobile communication standards such as GSM, PDC, TDMA, IS-95, WCDMA. It should however be mentioned that the invention generally applies to digital telecommunication systems no matter whether they are radio (i.e. wireless) or wireline telecommunication systems. Moreover, the invention also applies to uni-directional ("one-way") communication systems such as broadcasting systems.

Fig. 2 shows a block diagramme of a transceiver used in mobile terminals and base stations. Both the mobile terminal 1 and the base station 3 are equipped with one (or several) antenna(s) 5, an antenna duplex filter 6, a radio frequency receiver part 7, a radio frequency transmitter part 8, a baseband processing unit 9 and an interface 10. In case of a base station, the interface 10 is an interface towards a controller controlling the operation of the base station, while in case of a mobile terminal, the interface 10 includes a microphone, a loudspeaker, a display etc., i.e. components necessary for the user interface.

The present invention relates to the baseband processing unit 9. The skilled person will readily appreciate that instead of transceivers each having a common baseband processing unit for both the transmission and the reception branches, in uni-directional (broadcasting) communication systems, there are transmitters each including a first baseband processing unit for the transmission branch only and separate receivers each including a second baseband processing unit for the reception branch only. The invention applies to all such baseband processing units.

The person skilled in the art will also appreciate that such baseband processing units can be implemented in different technologies such as FPGA (field programmable gate array), ASIC (application specific integrated circuit) or DSP (digital signal processor) technology. In these cases, the functionality of such baseband processing units is described (and thus determined) by a computer program written in a given programming language such as VHDL, C or Assembler which is then converted into a file suitable for the respective technology.

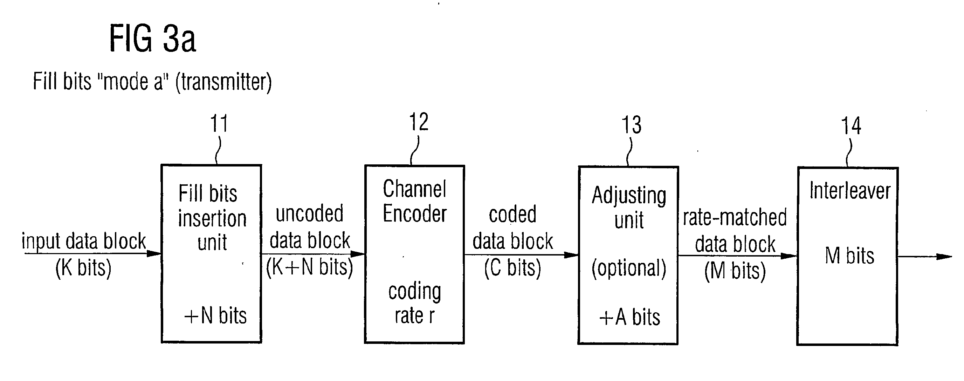

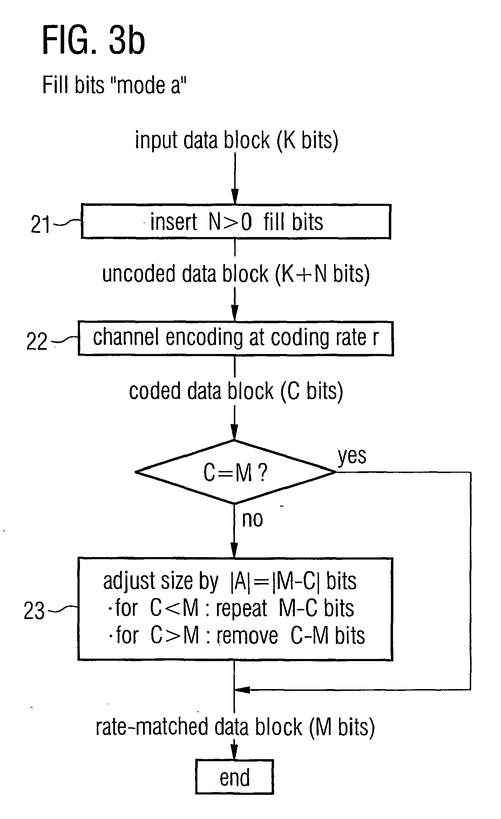

### First embodiment (fill bits "mode a"): Figures 3a, 3b

Fig. 3a provides a block diagramme of parts of the transmission branch of a transceiver's (or transmitter's) baseband processing unit. In particular, a "fill bits insertion unit" 11 is provided for inserting (adding) a total of N>0 so-called "fill bits", i.e. bits with predetermined values, to the input data block consisting of K input bits (information bits, payload bits, user bits etc, possibly including appended CRC bits etc.). Thereby, a data block consisting of K+N bits is created. This data block is referred to as "uncoded" data block.

It is important to note that according to the invention, fill bits are inserted prior to the generation of redundant information in the channel encoder. According to the first embodiment of the invention, which will be referred to as fill bits "mode a" in the sequel, the fill bits are inserted "in front of" the channel encoder (viewed in the direction of the data flow, i.e. from the left hand side in Figure 3a to the right hand side). In other words, it is the uncoded data block consisting of the K input bits and the N fill bits, which is processed by the channel encoder 12 as explained above with reference to the prior art. The channel encoder can be a convolutional coder, a concatenated convolutional coder (such as a turbo coder), a block coder etc.. Depending on the coding rate r and the number of tail bits required for trellis termination, the channel encoder 12 will convert the uncoded data block comprising K+N bits into a coded data block having a length C(N) equal to (cf. equation (3a))

$$C'(N) = (K+N)/r + T , \qquad (6a)$$

wherein T≥0 denotes the number of coded tail bits. Of course, the number of coded (output) bits will depend on the number N of fill bits in the uncoded data block. This is emphasized by the notation C'(N), wherein the prime sign (apostrophe) indicates the first embodiment ("mode a") of the invention. Note that the principal properties of and the assumptions relating to the channel encoder stated in the above sections on the prior art and the summary of the invention do also apply to this (and the following) embodiments of the invention. In particular, reference is made to the assumption of an encoder-internal generation of tail bits (where appropriate) as well as to the assumption of an encoder-internal puncturing for the purpose of achieving the desired coding rate (where appropriate). Also, equation (6a) is to be interpreted in analogy with equation (1). This is to say that out of the C'(N) bits contained in the coded data block, (K+N)/r bits result from the encoding of the uncoded data block (consisting of K input bits and N fill bits), while a total of T output bits was derived from a given number of tail bits introduced inside the channel encoder. Also, any subsequent reference to C' (N) and/or equation (6a) assumes measures for obtaining an integer number of coded output bits to have been taken, such measures being obvious to the skilled person (also see the explanations of equations (3a) and (3b)).

In order to precisely match the size C(N)=C'(N) of the coded data block to a pre-specified target block size M (which, according to the above sections on the prior art and the summary of the invention, can for example be the size of an interleaver or a particular block length required for transmission), an optional "adjusting unit" 13 is provided for repeating or removing ("puncturing") a number |A(N)| of bits equal to (cf. equation (4))

$$A'(N) = M - C'(N) = M - T - (K+N)/r \;, \qquad (7a)$$

wherein positive values of A'(N) indicate a repetition of A'(N) bits in the coded data block while negative values imply that |A'(N)|=-A'(N) bits are to be removed therefrom. It must however be stressed that |A'(N)| will be smaller than |A| according to the prior art (where A=M-C=M-C(0)) and that depending on the specific values of the parameters K, N, r, T, and M, the adjusting unit 13 may (for A' (N)≠0) or may not (for A' (N)=0) be required, as will be apparent from the examples described below.

Finally, the rate-matched data block of length M is processed by further transmitter components such as an interleaver 14, a modulator etc., as described above with respect to the prior art. These further components are omitted in the following for conciseness reasons.

Figure 3b shows a flow chart corresponding to Fig. 3a and thus also refers to the first embodiment of the invention ("mode a"). Note that all definitions (of parameters [K,N,r,C,A,M], types of data blocks [input/uncoded/coded/rate-matched] and bits [input/fill/tail/coded]), equations and assumptions relevant to Fig. 3a also apply to Fig. 3b.

In a first step 21, a total of N>0 fill bits is inserted (added) to the input data block consisting of K input bits. The resulting "uncoded" data block consisting of K+N bits is then channel encoded, at a coding rate r, in a second step 22, thereby creating a coded data block having a length C(N) equal to C'(N) as defined in equation (6a). If C(N)=C'(N) is equal to the pre-specified target block size M, no further step is required, because a data block comprising M bits is already available upon execution of the second step 22. If, however, C'(N) is not equal to M, the size of the coded data block is adjusted in a third step 23 by a number |A(N)| of bits in order to obtain a rate-matched data block having said target block size M. Herein, A(N) is equal to A'(N)=M-C'(N) as defined in equation (7a). For C'(N)<M, i.e. A'(N)>0, said third step 23 includes repeating A'(N)=M-C'(N) bits in the coded data block while for C'(N)>M, i.e. A'(N)<0, said step comprises removing ("puncturing") |A'(N)|=-A'(N)=C'(N)-M bits therefrom. In all cases, a rate-matched data block of length M is output by the sequence of'steps.

In summary, it can be concluded from the flow chart shown in Figure 3b that fill bits are inserted (step 21) *prior to (before)* the channel encoding step 22 while only a residual adjustment in size (step 23) may or may not be necessary after channel encoding.

In both the block diagramme of Fig. 3a and the flow chart of Fig. 3b, the number N of fill bits is preferably selected so as to minimize the value of |A'(N)|. Given the values of the parameters K, r, T, and M, this can be achieved by determining N according to

$$N_1 = \text{round}\{r*(M-T) - K\} \;, \qquad (8a1)$$

wherein the "round" operation ensures minimisation of |A'(N)|. When the number of fill bits is selected according to eq. (8a1), less than 1/r bits will have to be repeated or punctured in the adjusting unit 13 (Fig. 3a) and the adjusting step 23 (Fig. 3b), respectively.-According to equation (7a), the precise value of A'(N) will then be given by

$$A'(N_1) = M - C'(N_1) = M - T - (K+N_1)/r ,$$

where, in case of A'(N_1)=0, the adjusting unit 13 is not required and the adjusting step 23 is not executed. Otherwise, positive values of A' (N_1) suggest a residual repetition of A' (N_1) bits while negative values imply a residual puncturing of |A'(N_1) | bits.

As an alternative, the number N of fill bits can be selected so as to minimize the value of |A'(N)| given one of the boundary conditions A'(N)≥0 or A'(N)≤0. This is to say that, a-priori, it is determined whether repetition (A'(N)>0) or puncturing (A'(N)<0) operations should be executed, if required at all, by the adjusting unit 13 and in the adjusting step 23, respectively. Then, a number of fill bits is determined which minimises the value of |A'(N)| while satisfying this boundary condition. In this case, the number of fill bits is to be determined according to

$$N_2 = \text{floor}\{r*(M-T) - K\} , \quad \text{"Res. Repetition"} \quad (8a2)$$

when the boundary condition is "execute repetition operations only", and according to

$$N_3 = \text{ceil}\{r*(M-T) - K\} , \quad \text{"Res. Puncturing"} \quad (8a3)$$

when the boundary condition is "execute puncturing operations only", respectively, wherein the floor operation yields the largest integer value inferior or equal to the argument and the ceil operation delivers the smallest integer value greater than or equal to the argument. The resulting values for A'(N) are then given by A'(N_2) and A'(N_3), respectively, according to equation (7a).

The following examples are intended to illustrate the equations described above. They are based on experiments executed by the applicant during the standardization process of the WCDMA standard, where, e.g., the following coding schemes are specified:

- convolutional coding with constraint length 9 and coding rates r=1/2 (referred to as coding mode "CC-1/2") and 1/3 (denoted coding mode "CC-1/3")
- turbo coding with coding rate r=1/3 and two 8-state constituent encoders (coding mode "TC").

The number T of coded tail bits also depends on the coding mode: T=16 (CC-1/2), T=24 (CC-1/3), T=12 (TC).

*Example E1:*

Assume that for a given service with a particular data rate, the usage of coding mode CC-1/2 (i.e. r=1/2, T=16) with an uncoded block size of K=332 bits and a target block size of M=700 is specified. According to the prior art as described with reference to Fig. 10a, the size of a coded block would in this example amount to C=K/r+T=332*2+16=680 bits (cf. eq. (1)) thus making necessary an adjusting unit/step repeating a total of A=M-C=700-680=20 bits (eq.(2)). According to the invention, N_1=round{r*(M-T)-K}=round{(700-16)/2-332}=10 fill bits could be used according to eq. (8a1) in this example thus leading to a size of C'(N_1)=(K+N_1)/r+T=(332+10)*2+16=700 bits (cf. eq. (6a)). In view of the target block size of M=700 bits, no adjusting unit/step is necessary in this example, as can be seen from eq. (7a): A'(N_1)=M-C'(N-1)=700-700=0.

*Example E2:*

If, however, the target block size was M=701 instead of 700, while the other parameters remain unchanged (r=1/2, T=16, K=332), we have

| N = ... | A'(N) = ... [eq.(7a)] | Adjusting unit/step |
|---|---|---|
| N_1=11 [eq.(8a1)] | A'(N_1)=-1 | puncture one bit |
| N_2=10 [eq.(8a2)] | A'(N_2)=+1 | repeat one bit |
| N_3=11 [eq.(8a3)] | A'(N_3)=-1 | puncture one bit |

so that a residual rate matching is required in the adjusting unit/step (one bit must either be repeated or punctured).

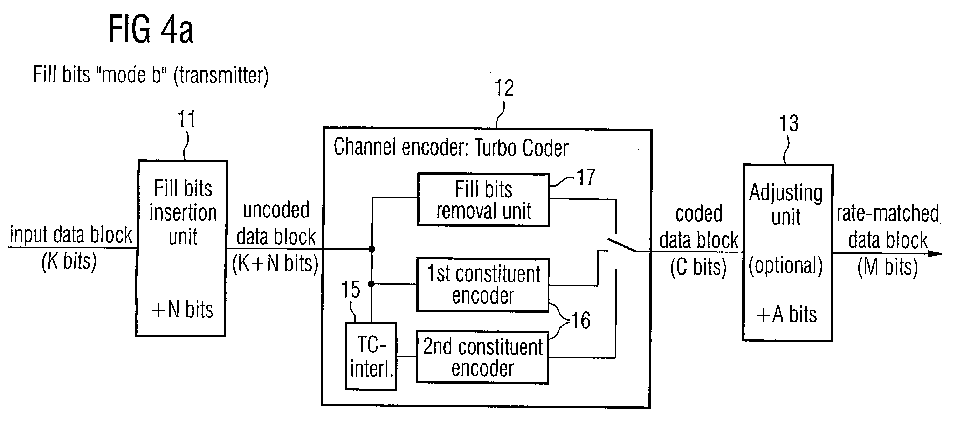

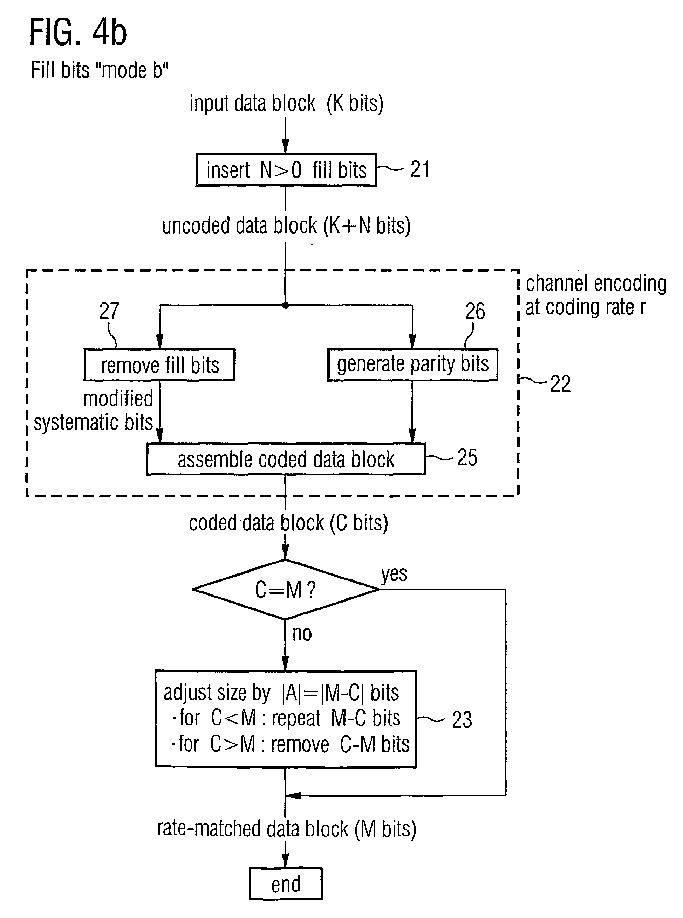

**Second embodiment (fill bits "mode b"): Figures 4a, 4b**

A second embodiment of the invention is shown in Figures 4a and 4b, wherein for blocks and steps having the functionality as described with respect to Figures 3a and 3b, respectively, the same numerals are used.
In Figure 4a, a fill bits insertion unit 11 is provided in accordance with Fig. 3a. In contrast to Fig. 3a, however, it is assumed in Fig. 4a that the channel encoder 12 is a turbo coder (TC). As is well-known in the art, a turbo coder is a parallel concatenated convolutional coder with at least two constituent encoders 16 and one turbo code interleaver 15. Note that the insertion of N fill bits requires the size of the turbo code interleaver 15 to be increased from K bits (prior art) to K+N bits. Such an increase in interleaver size generally has a favourable effect on the receiver performance. While the output bits of the constituent encoders usually are referred to as "parity" (or "non-systematic") bits, turbo coders according to the prior art also output the input data "as is". These unaltered (and thus uncoded) output bits of a channel encoder are commonly referred to as "systematic" bits. For the turbo coder shown in Fig. 4a, an exemplary coding rate of r=1/3 was chosen, so that for each input bit, a total of three output bits is generated. The parity bits are generated by the first and second constituent encoders 16, while the systematic bits are passed along the upper horizontal line inside the turbo coder block 12. It is assumed in Fig. 4a that the encoder output bits (possibly including coded tail bits) are multiplexed into a single bit stream by a switch. However, this multiplexing is for illustrative purposes only, because it is not important to the invention whether the channel encoder generates a serial or a parallel output as long as the subsequent components take this difference into account in their operations.
According to the second embodiment of the invention, a "fill bits removal unit" 17 is provided in the turbo coder such that the (N) fill bits added by the preceeding fill bits insertion unit 11 are removed, i.e. deleted or punctured, from the systematic encoder output bits. Using fill bits only in the non-systematic paths of a turbo coder (this will be referred to as fill bits "mode b" in the sequel) does have an advantageous effect on the receiver performance, as can be seen from the simulation results described below. Due to the removal of the fill bits from the systematic encoder output bits, the total number of output bits C(N) decreases by N bits compared with equation (6a) and thus assumes the value of (cf. equation (3b))

$$C''(N) = (K+N)/r - N + T = (K+N*(1-r))/r + T \,, \quad (6b)$$

wherein the double-prime (quotation mark) is used to indicate "mode b" of the invention. Finally, in order to match the size C(N)=C"(N) to the target block size M, an optional adjusting unit 13 is provided in Fig. 4a. The number A(N) of bits to be repeated or punctured by the adjusting unit 13 can be obtained from (cf. equations (4) and (7a))

$$A''(N) = M - C''(N) = M - T - (K+N*(1-r))/r \,. \quad (7b)$$

Note that for given values of the parameters K, r, T and M, the number A"(N) for the second embodiment will, for any given value of N, exceed the corresponding number A'(N) [eq. (7a)] for the first embodiment by N, i.e.:

$$A''(N) = A'(N) + N \,.$$

Also note that the comments on equations (6a) and (7a) apply to equations (6b) and (7b) in an analogous manner.

The skilled person will readily appreciate that the fill bits "mode b" described above with reference to the second embodiment of the invention does apply to all channel encoders generating systematic output bits, independent from the value of the coding rate r. Instead of a turbo coder, a systematic convolutional coder (i.e. a convolutional coder which also outputs the input data "as is") could therefore also be used without departing from the inventive concept. Just as with the turbo coder, the fill bits removal unit 17 would delete the fill bits from the systematic output bits while keeping the fill bits for the generation of the parity bits.

The skilled person will readily appreciate that the fill bits removal unit 17 could also be located between the channel encoder 12 and the adjusting unit 13, instead of inside the channel encoder 12. It is obvious that in this case it must be made sure that only systematic output bits from the encoder are affected by the fill bits removal unit.

Typically, the channel encoder 12 will be implemented in FPGA, ASIC or DSP technology. In these cases, its functionality is described/determined by a computer programm. Thus, it can be stated that a channel encoder implemented in this way is adapted to execute the substeps as explained below with respect to Figure 4b.

Figure 4b shows a flow chart corresponding to Fig. 4a and thus also refers to the second embodiment of the invention ("mode b"). All definitions, equations and assumptions relevant to Fig. 4a also apply to Fig. 4b. While the inserting step 21 of Figure 4b is identical to the respective step of Fig. 3b, the channel encoding step 22 now includes a systematic path in addition to the usual path for the generation of parity bits. In a first substep 26, parity bits are generated from the uncoded data block (comprising K+N bits) input to the channel encoding step 22. In a second substep 27 (which may be executed before, during or after execution of the first substep), the (N) fill bits previously inserted by the inserting step 21 are removed again from the bits contained in said uncoded data block, thereby generating (K) "modified systematic" bits. Finally, in a third substep 25, executed upon completion of the substeps 26 and 27, the coded data block having a length C(N) equal to C"(N) as defined in equation (6b) is assembled on the basis of said modified systematic bits (identical to the K input bits), said parity bits, and possibly a number of coded tail bits (not shown).
Then, the coded data block is further processed as described above with respect to Fig. 3b, i.e., if C(N)=C"(N) is equal to the pre-specified target block size M, no further step is necessary. If, however, C"(N) is not equal to M, the coded data block is adjusted in step 23 by a number |A(N)| of bits. Herein, A(N) is equal to A"(N) as defined in equation (7b). For C"(N)<M, i.e. A"(N)>0, said step 23 includes repeating A"(N)=M-C"(N) bits in the coded data block while for C"(N) >M, i.e. A"(N)<0, said step comprises removing ("puncturing") |A"(N)|=-A"(N)=C"(N)-M bits therefrom. In all cases, a rate-matched data block of length M is output by the sequence of steps.
It is clear from Figure 4b that any channel coding scheme generating systematic output bits is suitable for an application of fill bits "mode b". Also, it is obvious that the step of removing fill bits (step 27) could be executed after the coded data block has been assembled in step 25 provided that it is made sure that only systematic bits are affected by the removal operation.

In both the block diagramme of Fig. 4a and the flow chart of Fig. 4b, the number N of fill bits is preferably selected so as to minimize the value of |A"(N)|. Given the values of the parameters K, r, T, and M, this can be achieved by determining N according to

$$N_4 = \mathrm{round}\{(r*(M-T)-K)/(1-r)\}, \qquad (8b)$$

where, just as described with respect to equations (8a1), (8a2) and (8a3), the "round" operation can be replaced with a "ceil" or "floor" operation, each having their specific advantage as described above with respect to the first embodiment of the invention. The resulting values for A"(N) will then be given by A"(N_4) according to equation (7b), where a zero value again indicates that the adjusting unit/step can be omitted.
Note that for given values of the parameters K, r, T, and M, due to the division by (1-r) < 1, the number N_4 of fill bits as determined by equation (8b) is higher than the numbers N_1 to N_3 according to equations (8a1)-(8a3), because more fill bits can be inserted according to the second embodiment of the invention compared with the first embodiment.

*Example E3:*

Assume that for a packet data service with 64 kbit/s, the usage of turbo coding (coding mode TC: r=1/3, T=12) with an uncoded block size of K=2576/4=644 bits and a target block size of M=9172/4=2293 is specified. According to the prior art as described with reference to Fig. 10a, the size of a coded block would in this example amount to C=K/r+T=644*3+12=1944 bits (cf. eq. (1)) thus making necessary an adjusting unit/step repeating a total of A=M-C=2293-1944=349 bits (eq. (2)). According to the invention and in particular to equation (8b), N_4=round{(r*(M-T)-K)/(1-r)}=round{((2293-12)/3-644)/(2/3)}=round{174.5}=175 fill bits could be used in this example thus leading, according to eq. (6b), to a size of C" (N_4)=(K+N_4*(1-r))/r+T= (644+175*2/3)*3+12=2294 bits. In view of the target block size of M=2293 bits, this would require an adjusting unit 13 deleting one bit from the coded data block, as confirmed by equation (7b): A"(N_4)=M-C"(N_4)=2293-2294=-1. Alternatively, if N_5=floor{174.5}=174 fill bits are used, we have C"(N_5)= (K+N_5*(1-r))/r+T=(644+174*2/3)*3+12=2292 bits so that A"(N_5)=2293-2292=1 bit has to be repeated.

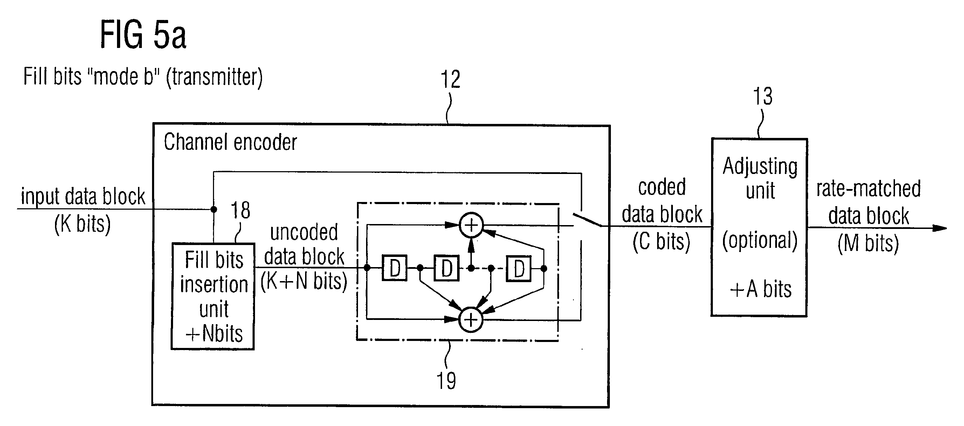

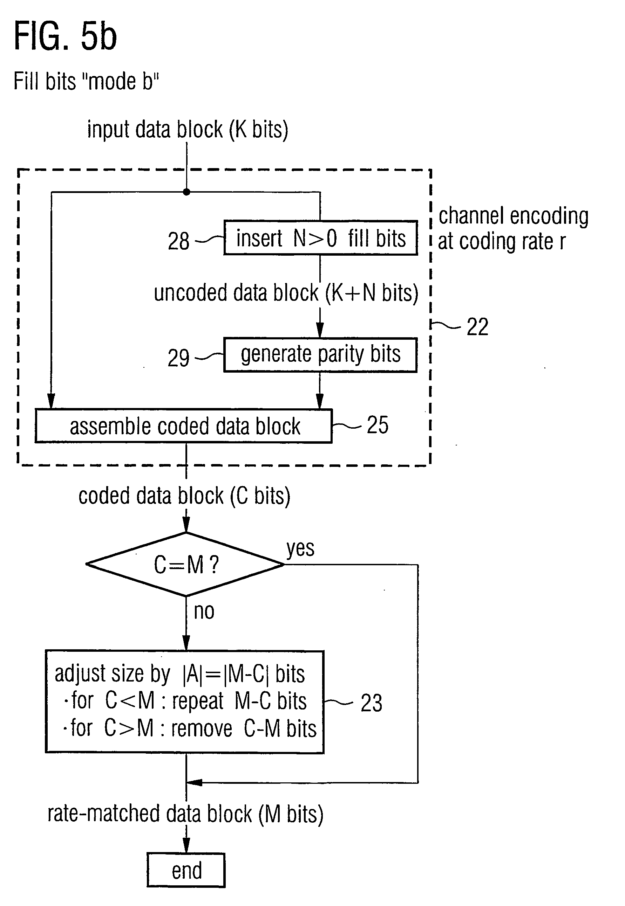

**Third embodiment (fill bits "mode b"): Figures 5a, 5b**

From the above explanations with respect to fill bits "mode b" (Figures 4a/4b), it is straight-forward that, instead of inserting fill bits prior to channel coding and removing them from the systematic bits (either during or after channel encoding), fill bits could only be added to the bits used for the generation of redundant information, i.e. of parity bits. A third embodiment of the invention (also referring to fill bits "mode b") is shown in Figures 5a and 5b, wherein for blocks and steps having the functionality as described with respect to Figures 4a and 4b, respectively, the same numerals are used in general.
As opposed to Figures 3a and 4a, no fill bits insertion unit is provided in front of the channel encoder 12 in Figure 5a. Instead, a "fill bits insertion unit" 18 is placed at the input of that part of the channel encoder 12 which actually generates redundant information (in the form of parity bits). In other words, it is placed at the input to the non-systematic part of the channel encoder 12, i.e. after the systematic path is branched off. While just as with Figure 4a, any systematic channel encoder 12 (with any coding rate r) could be used in principal, in Figure 5a, the channel encoder 12 is assumed to be a systematic convolutional encoder, i.e. a convolutional encoder also outputting the input data "as is" on the upper horizontal line in the channel encoder box. As can be seen in Figure 5a, the fill bits insertion unit 18 is placed at the input of the convolutional encoder as *such* (19), i.e. at the input line to the delay elements "D" thereof. The skilled person will readily appreciate that in case of a turbo coder (according to the one of Fig. 4a, e.g.), the fill bits insertion unit 18 would have to be placed in the (common) input line to the first constituent encoder and the turbo interleaver (after the systematic path is branched off), while the fill bits removal unit could be omitted. The systematic bits and the parity bits (and possibly coded tail bits) are then fed into a multiplexing switch, which, just as in Figure 4a, is shown in Figure 5a for illustrative purposes only. For each input data block comprising K bits, the channel encoder 12 will output a coded data block having a length C(N) equal to C"(N) as defined in equation (6b). Finally, an adjusting unit 13 is provided as described above with respect to Figure 4a.
According to the third embodiment of the invention (Figure 5a), fill bits are thus inserted inside the channel encoder 12 (in unit 18), as opposed to the first and second embodiments (Figures 3a and 4a), where the fill bits are inserted in *front of* the channel encoder (in unit 11). In all embodiments described above, it can however be stated that in contrast to the prior art, fill bits are inserted *prior* to the generation of redundant information in the channel encoder, i.e. prior to channel encoding as such, while only a residual adjustment unit 13 may or may not.be necessary after the channel encoder 12.

As stated above with respect to Fig. 4a, typically, the channel encoder 12 will be implemented in FPGA, ASIC or DSP technology. It can thus be stated that a channel encoder implemented in this way is adapted to execute the substeps as explained below with respect to Fig. 5b.

Figure 5b shows a flow chart corresponding to Fig. 5a and thus also refers to the third embodiment of the invention ("mode b"). Again, all definitions, equations and assumptions relevant to Fig. 5a also apply to Fig. 5b. In contrast to Figures 3b and 4b, the channel encoding step 22 of Figure 5b directly processes (i.e. channel encodes, at a coding rate r) the input data block comprising K input bits. In a first substep 28, a total of N>0 fill bits is inserted (added) into said input data block, thereby creating an uncoded data block (comprising K+N bits) to be further processed in a second substep 29 of generating redundant information in the form of parity bits (possibly together with coded tail bits). In a third substep 25, the coded data block having a length C(N) equal to C"(-N) as defined in equation (6b) is assembled on the basis of said parity bits, systematic bits (identical to the K input bits), and possibly a number of coded tail bits. Then, the coded data block is further processed as described above with respect to Fig. 4b.
It is clear from Figure 5b that any channel coding scheme generating systematic output bits is suitable for an application of fill bits "mode b" (cf. Fig. 4b). According to the third embodiment of the invention (Figure 5b), fill bits are thus inserted (step 28) during the channel encoding step 22, as opposed to the first and second embodiments (Figures 3b and 4b), where fill bits are inserted in step 21, i.e. *prior to* channel encoding. In all embodiments described above, it can however be stated that in contrast to the prior art, fill bits are inserted (in the steps 21, 21, and 28, respectively) *prior to* the generation of redundant information (in steps 22, 26, and 29, respectively), i.e. prior to channel encoding as *such,* while only a residual adjustment in size (step 23) may or may not be necessary after channel encoding.

Functionally, the third embodiment of the invention according to Figures 5a and 5b is identical to the second embodiment described above with respect to Figures 4a and 4b. For this reason, all equations (eq. (6b), (7b), (8b)) valid for fill bits "mode b" do hold for both the second and third embodiments.

In all embodiments described above with respect to the Figures 3a/b, 4a/b and 5a/b, the fill bits are bits with predetermined values which, typically, do not depend on the data to be transmitted (information bits, payload bits, user bits etc.), i.e. on the values of the K input bits. For instance, the fill bits can all have a value of zero, as will be seen from the simulation results described below. Alternatively, they could all have a value of one or any other pattern of zeros and ones. When the fill bits are added in groups, patterns can be used to "drive" the encoder/decoder trellis into a predefined (desired) state.

As for the question, where to insert the fill bits (i.e. at what positions inside the input data block), several options are available for all embodiments described above. For example, the fill bits can be scattered inside the input data block, i.e. single fill bits can be inserted at non-adjacent positions, possibly in an equidistant or near-equidistant manner. Alternatively, the fill bits can be divided into groups which are then inserted at non-adjacent positions possibly in an equidistant or near-equidistant manner. Such alternatives will be described below with respect to the simulation results.

When fill bits are inserted in a transmitter according to one of the embodiments described above, a receiver can achieve a superior performance (higher gain) compared with the case of unequal bit repetition after channel encoding. In order to fully exploit the possibilities introduced by the insertion of fill bits, the receiver (decoder) has to be modified slightly.

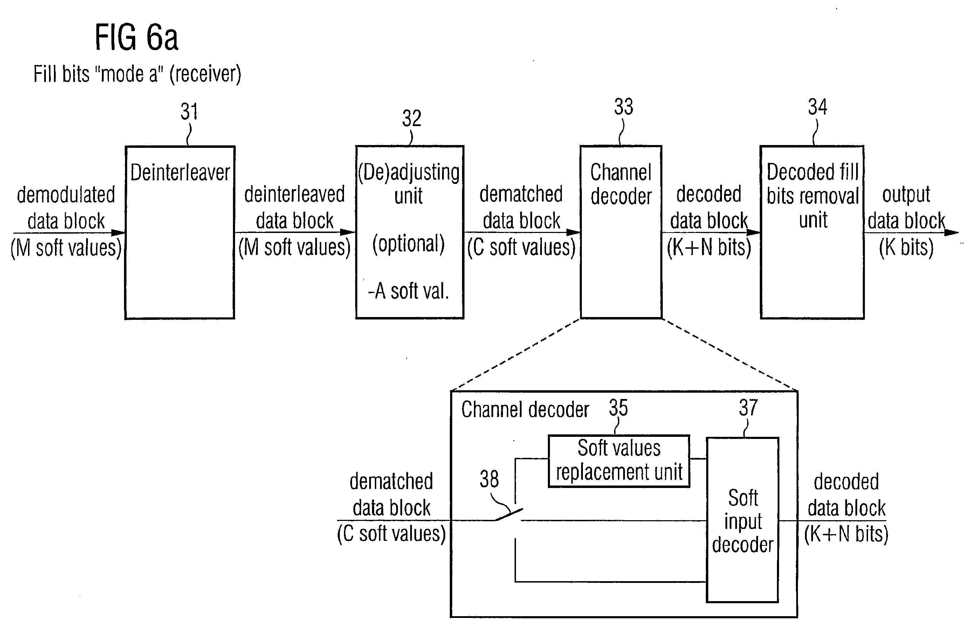

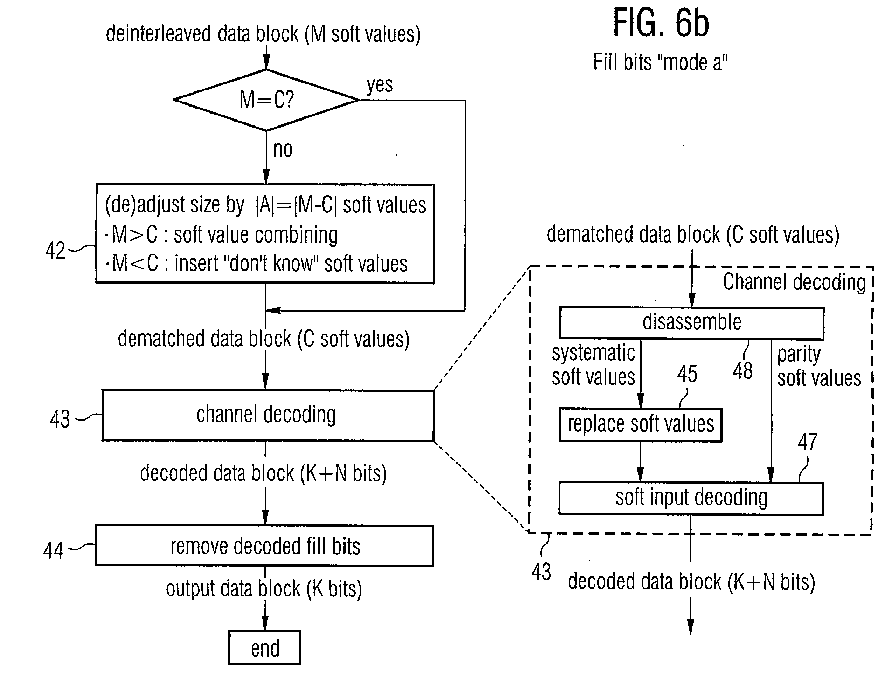

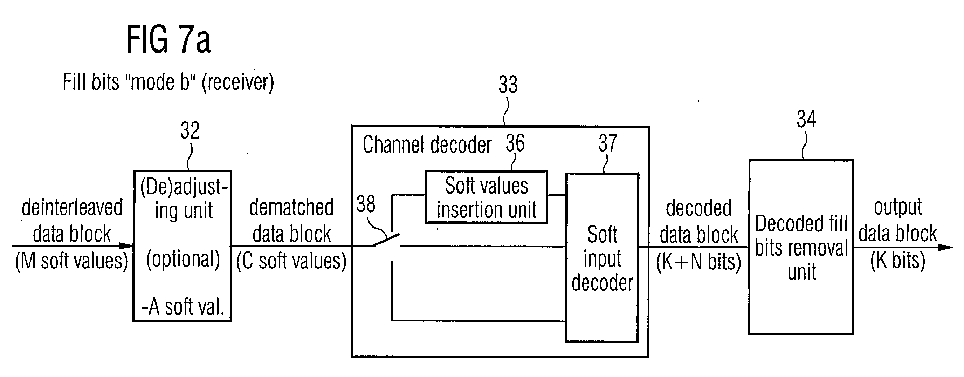

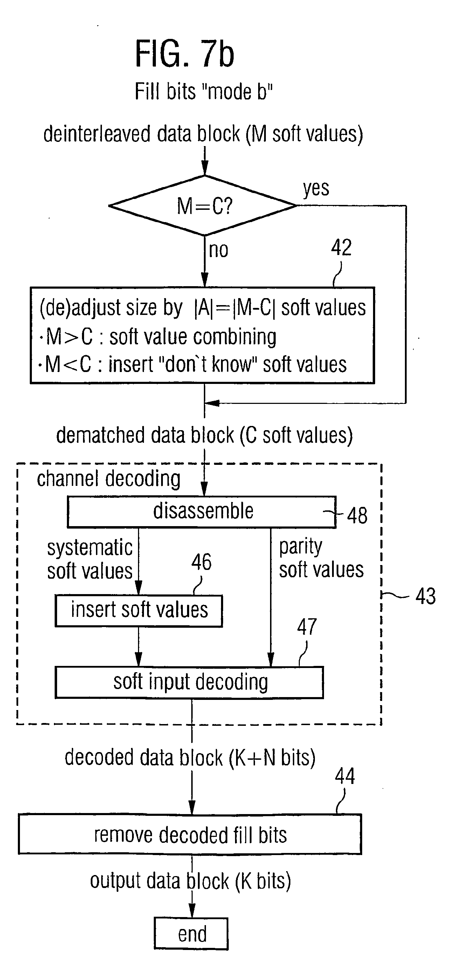

In the following, three receiver embodiments will be described with respect to the Figures 6 and 7. For these receiver embodiments, it is assumed that N fill bits were inserted at the transmitting side according to one of the three transmitter embodiments described above with respect to Figures 3 to 5. The resulting rate-matched data block comprising M bits is then interleaved, modulated, transmitted over the physical channel, demodulated/equalized and deinterleaved according to the prior art. In particular, it is assumed that the receiver is provided with a soft output demodulator capable of delivering reliability information in the form of soft values, as described above with respect to Fig. 10b. The resulting demodulated data block comprising M soft values is then deinterleaved into a deinterleaved data block corresponding to said rate-matched data block at the transmitting side (cf. Fig. 10).

The parameters K, N, r, T, C(N), A(N) and M, defined above with respect to the transmitter embodiments and the prior art, will also be used for the description of the receiver embodiments. Although their values are the same in the transmitter and the receiver, the skilled person will readily appreciate that in the receiver, the parameters T, C(N), A(N), and M refer to numbers of soft values rather than to numbers of bits. Furthermore, it is assumed that the respective relations between these parameters, as expressed by equations (6a)-(8a) for fill bits "mode a" and equations (6b)-(8b) for "mode b", also apply to the receiver embodiment together with the underlying assumptions (adapted to the receiver, where appropriate).

**Fourth and fifth embodiments ("mode a"): Figures 6a, 6b**

Figure 6a provides a block diagramme of parts of the reception branch of a transceiver's (or receiver's) baseband processing unit. This block diagramme is adapted to fill bits "mode a", i.e. it is based on the assumption that in the transmitter, N>0 fill bits were inserted according to the first embodiment of the invention as described above with respect to Fig. 3.

The upper part of Figure 6a refers to the fourth embodiment of the invention, while the bottom part refers to the fifth embodiment of the invention.

Figure 6b shows a flow chart corresponding to Fig. 6a and thus also refers to the fourth and fifth embodiments in its left and right parts, respectively. Note that all definitions (of parameters, types of data blocks, soft values and bits), equations and assumptions relevant to Fig. 6a also apply to Figure 6b.

FOURTH EMBODIMENT: Fig. 6a (upper part) / 6b (left part) For clarity reasons, Fig. 6a (upper part) shows a deinterleaver 31 for deinterleaving the demodulated data block comprising M soft values output by the soft output demodulator, as described above and also with respect to Fig. 10b. The resulting deinterleaved data block comprises M soft values corresponding to the M bits in the rate-matched data block at the transmitting side. The (de)adjusting unit 32 then adjusts the size of the deinterleaved data block from M to C(N) soft values, wherein C(N) is equal to C'(N) according to eq. (6a), thus undoing the adjustment in size at the transmitting side. In case the adjusting unit/step at the transmitting side has repeated A(N)>0 bits (wherein A(N) is equal to A'(N) acc. to eq. (7a)), the (de)adjusting unit 32 at the receiving side applies soft value combining as explained above with respect to Fig. 10b, thereby reducing the size of the deinterleaved data block by A(N) soft values. However, in case the adjusting unit/step at the transmitting side has removed |A(N)| bits (wherein A(N)=A'(N)) with A(N)<0, the (de)adjusting unit 32 in the receiver inserts |A(N)| "don't know" soft values (i.e. soft values corresponding to the lowest reliability level, e.g. 0.0) at positions corresponding to those positions where in the transmitter bits were removed. Of course, if no adjusting unit/step was required at the transmitting side, the (de)adjusting unit 32 can be omitted at the receiving side. In any case, a "dematched" data block comprising C(N)=C'(N) soft values (corresponding to the C(N)=C'(N) bits in the coded data block of Fig. 3) is obtained.

This dematched data block is then processed by the channel decoder 33 which employs a soft input decoding scheme as explained above with respect to the prior art. The resulting decoded data block corresponds to the uncoded data block of Fig. 3. From the total number of K+N bits in the decoded data block, N bits are decoded fill bits corresponding to the N fill bits inserted at the transmitting side, and K bits are output bits corresponding to the K input bits. If no bit errors occured, the N decoded fill bits are identical to the N fill bits and the K output bits are identical to the K input bits. Finally, a "decoded fill bits removal unit" 34 is provided for removing (deleting, puncturing) said N decoded fill bits from the decoded data block. Thereby, an output data block comprising said K output bits is generated. If no bit errors occurred, this output data block is identical to the input data block of Fig. 3.
In summary, it can be concluded from Figure 6a (top part) that N decoded bits corresponding to fill bits are removed in said decoded fill bits removal unit 34 located *behind* the channel decoder 33 while only a residual (de)adjusting unit 32 may or may not be necessary in front of the channel decoder 33.

In the flow chart of Figure 6b (left part), the number M of soft values in the deinterleaved data block (M is equal in value to the target block size used at the transmitting side) is compared with C(N) equal to C'(N) as defined in equation (6a), i.e. with the size of the coded data block at the transmitting side provided that "mode a" is applied. The skilled person will readily appreciate that this size is equal to the number of soft values in the data block to be channel decoded, as will be explained below.
If M is not equal to C(N)=C'(N), the size of the deinterleaved data block is (de)adjusted in a first step 42 by a number |A (N)| of soft values in order to obtain a dematched data block comprising said number C(N)=C'(N) of soft values. Herein, A(N) is equal to A'(N)=M-C'(N) as defined in equation (7a). For M>C'(N), i.e. A'(N)>0, said first step 42 includes reducing (by A'(N) soft values) the number of soft values in the deinterleaved data block by combining those soft values, which correspond to the same (original plus repeated) bits in the rate-matched data block, into a single soft value, i.e. by soft value combining as explained above with respect to Fig. 10b. For M<C'(N), i.e. A' (N)<0, said first step 42 comprises inserting (adding) |A'(N)|=-A'(N)=C'(N)-M "don't know" soft values (0.0 in the example explained with respect to Fig. 10b) at the positions corresponding to the positions where bits were deleted (punctured) at the transmitting side. If M is equal to C(N)=C'(N), step 42 is not executed. In all cases, a dematched data block comprising C(N)=C'(N) soft values (corresponding to the C(N)=C'(N) coded bits at the transmitting side) is available.

This dematched data block is then channel decoded in a second step 43 using a soft input channel decoding scheme (MAP etc.) as described above with respect to the prior art. The resulting decoded data block will then comprise K+N decoded bits, wherefrom N decoded bits correspond to the N fill bits inserted at the transmitting side and K decoded bits correspond to the K input bits input at the transmitting side.
In a third step 44, said N decoded bits corresponding to fill bits are removed (deleted, punctured) from the decoded data block, thereby generating an output data block comprising K output bits corresponding to the K input bits at the transmitting side. If no bit errors occurred, the output data block is identical to the input data block at the transmitting side.
In summary, it can be concluded from Figure 6b (left part) that N decoded bits corresponding to fill bits are removed (step 44) after the channel decoding step 43 while only a residual (de)adjustment in size (step 42) may or may not be necessary before channel decoding.

FIFTH EMBODIMENT: Fig. 6a (bottom part) / 6b (right p.) When a systematic channel encoder was used in the transmitter (such as the channel encoders shown in Figures 4a and 5a, e.g.), the receiver performance can be further improved if a channel decoder according to the detailed view in the bottom part of Fig. 6a is provided. Herein, the dematched data block (derived according to the upper part of Fig. 6a) is disassembled into, at least, a first group of soft values (referred to as systematic soft values) corresponding to systematic bits generated in the channel encoder, and a second group of soft values (referred to as parity soft values) corresponding to parity bits generated in the channel encoder at the transmitting side (and possibly a third group of tail soft values corresponding to coded tail bits). The bottom part of Fig. 6a shows an exemplary channel decoder for a systematic channel encoder using a coding rate of r=1/3. A demultiplexing switch 38, shown for illustrative purposes only, is used in order to disassemble the dematched data block comprising C(N)=C'(N) soft values [eq. (6a)] into said systematic soft values (on the uppermost horizontal line in the channel decoder), said partity soft values (on the middle and bottom horizontal lines; for other coding rates, more or less "parity" paths would be used, of course) and possibly said tail soft values (not shown). In the path for the systematic soft values (upper horizontal line), a "soft values replacement unit" 35 is provided for replacing, in the systematic soft values, those N soft values which correspond to fill bits, with N soft values representing the highest reliability level for the (known) values of the N fill bits, i.e. for each corresponding (predetermined) value of the N fill bits, thereby generating a modified first group of soft values. This replacement is possible, because according to fill bits "mode a" (see Fig. 3a, first embodiment), fill bits are transmitted over the systematic channel encoder path, too. As the values and positions of the fill bits are known to the receiver, their corresponding (systematic) soft values can be replaced with the soft value for a "secure one" (1.0, e.g.), if the fill bit value was 1 and with the soft value for a "secure zero" (-1.0, e.g.), if the fill bit value was 0. Finally, a soft input decoder 37 is provided for soft input decoding (MAP etc.), as described above with respect to the prior art, said modified first group of soft values and said second group of soft values (and possibly said tail soft values), thereby creating said decoded data block to be processed as described above with respect to the upper part of Figure 6a.

The skilled person will readily appreciate that the soft values replacement unit 35 could also be located between the (de)adjusting unit 32 and the channel decoder 33, instead of inside the channel decoder 33. It is obvious that in this case it must be made sure that only systematic soft values of the dematched data block are affected by the soft values replacement unit.

Typically, the channel decoder 33 will be implemented in FPGA, ASIC or DSP technology. In these cases, its functionality is described/determined by a computer programm. Thus, it can be stated that a channel decoder implemented in this way is adapted to execute the substeps as explained below with respect to the right part of Figure 6b.

According to the flow chart in the right part of Figure 6b, the dematched data block (derived according to the left part of Fig. 6b) is disassembled in a first substep 48 into systematic soft values (first group), parity soft values (second group) and possibly tail soft values (third group; not shown), wherein the terms "systematic soft values", "parity soft values", and "tail soft values" were defined above with respect to Figure 6a. In a second substep 45, out of said first group, those N systematic soft values corresponding to fill bits are replaced with N soft values representing the highest reliability level for the (known) values of the N fill bits, i.e. for each corresponding (predetermined) value of the N fill bits, thereby generating a modified first group of soft values. Finally, in a third substep 47, said modified first group of soft values and said second group of soft values (and possibly said third group) are soft input decoded (MAP etc.), as described above with respect to the prior art, thereby creating said decoded data block to be processed as described above with respect to the left part of Figure 6b.

The skilled person will readily appreciate that the replacing substep 45 could also be executed between the (de)adjusting step 42 and the channel decoding step 43, instead of during the channel decoding step 43. It is obvious that in this case it must be made sure that only systematic soft values of the dematched data block are affected by the replacing step 45.

**Sixth embodiment (fill bits "mode b"): Figures 7a, 7b**

A sixth embodiment of the invention is shown in Figures 7a and 7b, wherein for blocks and steps having the functionality as described with respect to Figures 6a and 6b, respectively, the same numerals are used.

Figure 7a provides a block diagramme of parts of the reception branch of a transceiver's (or receiver's) baseband processing unit. This block diagramme is adapted to fill bits "mode b", i.e. it is based on the assumption that in the transmitter, N>0 fill bits were inserted according to the second or third embodiment of the invention as described above with respect to Figures 4 and 5, respectively.

Figure 7b shows a flow chart corresponding to Fig. 7a and thus is also adapted to fill bits "mode b".

According to Fig. 7a, an optional (de)adjusting unit 32, a channel decoder 33, and a "decoded fill bits removal unit" 34 are provided. The (de)adjusting unit 32 and the "decoded fill bits removal unit" 34 have the same functionality as described above with respect to Fig. 6a. However, due to fill bits "mode b", the size C(N) of the dematched data block is equal to C"(N) according to equation (6b) and the number A(N) of soft values, by which the (de)adjusting unit 32 reduces or increases the deinterleaved data block is equal to A"(N) according to equation (7b). In the channel decoder 33, the dematched data block is disassembled by a demultiplexing switch 38 into systematic soft values (first group; upper horizontal line), parity soft values (second group; middle and bottom lines) and possibly tail soft values (third group), as described above with respect to the bottom part of Fig. 6a. In the path for the systematic soft values (upper horizontal line), a "soft values insertion unit" 36 is provided for inserting N soft values representing the highest reliability level for the (known) values of the N fill bits, i.e. for each corresponding (predetermined) value of the N fill bits, thereby generating a modified first group of soft values. This insertion is necessary, because according to fill bits "mode b" (see the second and third embodiments according to Figures 4a and 5a, respectively), fill bits are not transmitted over the systematic channel encoder path. However, as the values and positions of the fill bits (inserted into the parity channel encoder paths) are known to the receiver, a soft value for a "secure one" (1.0, e.g.) can be inserted at the appropriate position, if the corresponding fill bit value was 1 and a soft value for a "secure zero" (-1.0, e.g.) can be inserted, if the corresponding fill bit value was 0. Finally, a soft input decoder 37 is provided for soft input decoding, as described above with respect to Figures 6a and 10b (MAP etc.), said modified first group of soft values and said second group of soft values (and possibly said third group), thereby creating said decoded data block.

Finally, the skilled person will readily appreciate that the soft values insertion unit 36 could also be located between the (de)adjusting unit 32 and the channel decoder 33, instead of inside the channel decoder 33. It is obvious that in this case it must be made sure that only systematic soft values of the dematched data block are affected by the soft values insertion unit.

As stated above with respect to Fig. 6a, typically, the channel decoder 33 will be implemented in FPGA, ASIC or DSP technology. It can thus be stated that a channel decoder implemented in this way is adapted to execute the substeps as explained below with respect to Fig. 7b.

Figure 7b shows a flow chart corresponding to Fig. 7a and thus also refers to the sixth embodiment of the invention ("mode b"). All definitions, equations and assumptions relevant to Fig. 7a also apply to Fig. 7b. All steps of Figure 7b executed before or after the channel decoding step 43 correspond to the respective steps as described with respect to Fig. 6b, wherein due to fill bits "mode b" C(N)=C'(N) and A(N)=A'(N) are to be replaced with C(N)=C"(N) and A(N)=A"(N) according to equations (6b) and (7b), respectively. In the channel decoding step 43 of Figure 7b, the disassembling substep 48 and the soft input decoding substep 47 also correspond to the respective substeps as described with respect to the right part of Figure 6b. Therefore, the steps 42, 48, 47, and 44 of Figure 7b will not be explained here and reference is made to the description relating to Figure 6b. In contrast to Figure 6b, however, Figure 7b provides a substep 46 (executed after substep 48 and prior to substep 47) for inserting (adding), into said systematic soft values (first group of soft values), N soft values representing the highest reliability level for the (known) values of the N fill bits, i.e. for each corresponding (predetermined) value of the N fill bits, thereby generating a modified first group of soft values. Note that such an insertion of "secure one" and "secure zero" soft values is feasible because the positions where the N fill bits were inserted at the transmitting side are known to the receiver. As according to fill bits "mode b" (cf. the second and third embodiments of the invention), no systematic fill bits are actually transmitted, the soft values corresponding to these systematic fill bits are "missing" at the receiving side so that additional soft values must be added to the other systematic soft values at the positions corresponding to the positions where at the transmitting side, fill bits were inserted into the input data block. Since the values and the positions of the fill bits are known at the receiving side (although they are not transmitted over the systematic encoder path), "secure one" soft values can be inserted at the positions corresponding to fill bits having a value of 1 and "secure zero" soft values can be added at the positions corresponding to zero value fill bits.

The skilled person will readily appreciate that the inserting substep 46 could also be executed between the (de)adjusting step 42 and the channel decoding step 43, instead of during the channel decoding step 43. It is obvious that in this case it must be made sure that only systematic soft values of the dematched data block are affected by the inserting step 46.

In summary, it can be stated that according to the fifth embodiment of Figure 6 (fill bits "mode a"), the soft values corresponding to systematic fill bits are substituted with fully reliable true values of the corresponding fill bits (i.e. "secure zero" values, if the inserted fill bits all had a zero value, e.g.).
In contrast, according to the sixth embodiment of Figure 7 (fill bits "mode b"), fully reliable true values are inserted into the systematic soft values at positions where fill bits were inserted into the input data block. According to all receiver embodiments (fourth to sixth embodiments of Figures 6 and 7), the bits corresponding to the N fill bits are finally removed from the data block output by the channel decoder.

**General remarks relating to all embodiments:**

Typically, the rate matching apparati according to the first to third embodiments of the invention (Figures 3a, 4a, 5a) as well as the decoding apparati according to the fourth to sixth embodiments (Figures 6a, 7a) will be implemented in FPGA, ASIC or DSP technology. In these cases, the functionality of said apparati is described (and thus determined) by a computer program written in a given programming language such as VHDL, C or Assembler which is then converted into a file suitable for the respective technology. Thus, it can be stated that a rate matching apparatus or a decoding apparatus implemented in this way is adapted to execute the steps of the corresponding method as explained above with respect to Figures 3b, 4b, 5b, 6b, and 7b, respectively.

**Simulation results:**

The applicant has performed numerous evaluation studies in order to assess the performance of different rate matching and decoding schemes in the context of turbo coding (TC) proposals submitted to ETSI for WCDMA standardisation. The most illustrative simulation results are provided in the sequel.

*Simulation result S1:*

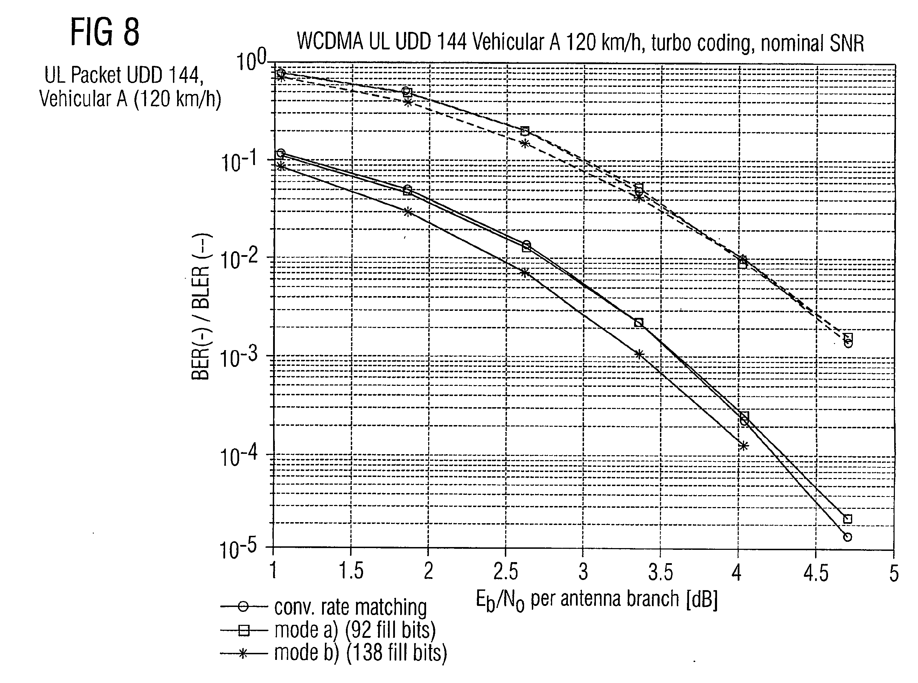

Figure 8 displays the bit error rates (BER, solid lines) and block error rates (BLER, dashed lines) in terms of Eb/N0 for a packet service ("UDD144") with 144 kbit/s on an uplink (UL) "vehicular A" (120km/h) scenario. For channel encoding, a turbo coder with coding rate r=1/3 is used, wherein T=8 coded tail bits are generated. Each input data block consists of K=332 bits. The target block size (interleaver size) is M=1280. A total of three different rate matching and decoding schemes was evaluated:

a) Conventional rate matching and decoding according to Figure 10 (unequal bit repetition after channel encoding in the transmitter and soft value combining [averaging] before channel decoding in the receiver): According to equation (1), the size of the coded data block amounts to C=K/r+T=332*3+8=1004 bits so that a rate matcher repeating A=M-C=1280-1004=276 bits is required according to equation (2).
b) Fill bits "mode a" according to Figures 3a/3b and 6a/6b (bottom part), wherein N=N_1 fill bits with zero values are inserted equidistantly. According to equation (8a1), we have N_1=round{r*(M-T)-K}= round{(1280-8)/3-332}=92. As a consequence, the size of the coded data block totals to [equation (6a)] C'(N_1)=(K+N_1)/r+T= (332+92) *3+8=1280 bits so that no adjusting unit/step is necessary, as confirmed by equation (7a): A' (N_1) =M-C' (N_1) =0.
c) Fill bits "mode b" according to Figures 4a/4b/5a/5b and 7a/7b, wherein N=N_4 fill bits with zero values were inserted equidistantly. According to equation (8b), we have N_4=round{(r*(M-T)-K)/(1-r)}=138.

Consequently, the size of the coded data block amounts to [eq.(6b)] C"(N_4)=(K+N_4*(1-r))/r+T= (332+138*2/3) *3+8=1280 bits so that, again, no adjusting unit/step is required, cf. equation (7b): A"(N_4)=M-C"(N_4)=0. Note that the number of fill bits in "mode b" exceeds the number of fill bits in "mode a" according to b) by N_4-N_1=138-92=46 bits.

As can be seen from Figure 8, fill bits "mode b" provides the best results with a gain of about 0.3dB (in Eb/N0, for BER) compared with the two other schemes. Conventional rate matching and decoding and fill bits "mode a" reveal a comparable performance whereby fill bits "mode a" is at some advantage in the (statistically more reliable) region of BER > $5*10^{-3}$.

*Simulation result S2:*

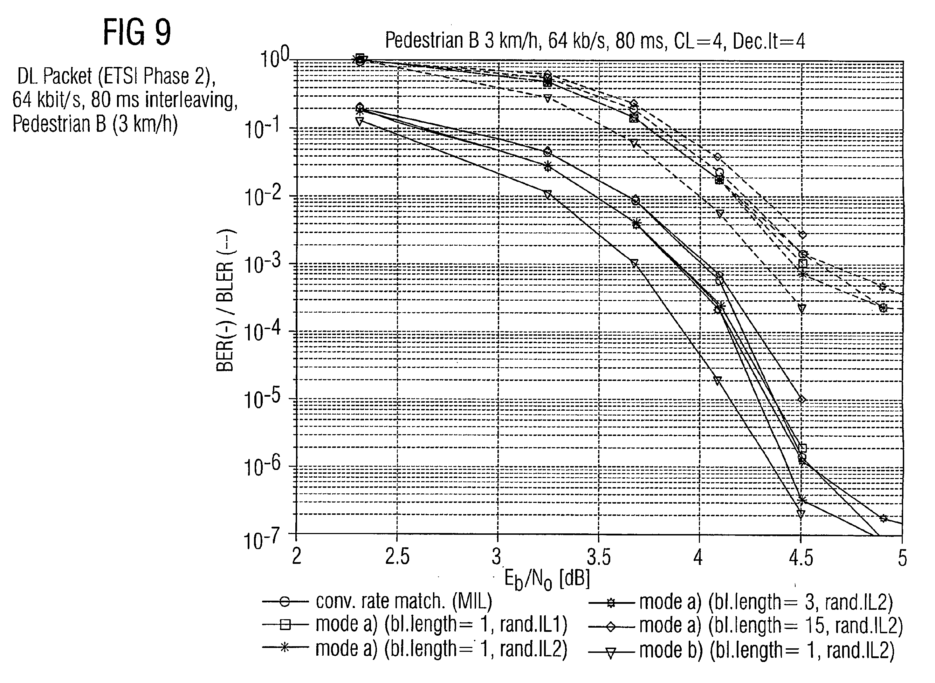

Figure 9 shows BER (solid lines) and BLER (dashed lines) in terms of Eb/N0 for a packet service (64 kbit/s and 80ms interleaving) on a downlink (DL) "outdoor to indoor (pedestrian) B" (3km/h) scenario. For channel encoding, again, a turbo coder with coding rate r=1/3 is used, wherein T=12 coded tail bits are generated. Each input data block consists of K=5120 bits. The target block size (interleaver size) is M=128*152=19456. Again, a total of three different rate matching and decoding schemes was evaluated:

a) Conventional rate matching and decoding according to Figure 10 (unequal bit repetition after channel encoding in the transmitter and soft value combining [averaging] before channel decoding in the receiver): According to equation (1), the size of the coded data block amounts to C=K/r+T=5120*3+12=15372 bits so that a rate matcher repeating A=M-C=19456-15372=4084 bits is required according to equation (2).

b) Fill bits "mode a" according to Figures 3a/3b and 6a/6b (bottom part), wherein N=N_1 fill bits with zero values were inserted. According to eq. (8a1): N_1=round{r*(M-T)-K}=round{(19456-12)/3-5120}=1361. Here, the size of the coded data block totals to C' (N_1)=(K+N_1)/r+T=(5120+1361)*3+12=19455 bits according to eq. (6a) so that an adjusting unit/step for repeating one bit is necessary, as confirmed by equation (7a): A'(N_1)=M-C'(N_1) =19456-19455=1.

A total of three different approaches of distributing the fill bits in the data blocks was investigated:

- insertion of single zero bits at equidistant positions (referred to as "bl.length=1" in Fig. 9)
- insertion of blocks of 3 consecutive zero bits at equidistant positions ("bl.length=3" in Fig. 9)
- insertion of blocks of 15 consecutive zero bits at equidistant positions ("bl.length=15" in Fig. 9).

c) Fill bits "mode b" according to Figures 4a/4b/5a/5b and 7a/7b, wherein N=N_4 fill bits with zero values were inserted equidistantly. According to equation (8b): N_4=round{(r*(M-T)-K)/(1-r)}=2042. Here, the size of the coded data block amounts to C"(N_4)=(K+N_4*(1-r))/r+T=(5120+2042*2/3)*3+12=19456 bits according to eq. (6b) so that no adjusting step/unit is required, as confirmed by equation (7b): A"(N_4)=M-C"(N_4)=19456-19456=0.

As can be seen from Figure 9, fill bits "mode b" again provides the best results with a gain of up to 0.4dB (at BER=$5*10^{-3}$, for BER) compared with conventional rate matching and decoding. Also, most of the curves related to fill bits "mode a" outperform conventional rate matching and decoding: apart from the case where fill bits are added in equidistant groups of 15 bits ("bl.length=15"), all other variants under consideration yield a gain of about 0.2dB (at BER=$5*10^{-3}$, for BER) compared with conventional rate matching and decoding. Finally, note that for conventional rate matching and decoding, an optimized multistage interleaver ("MIL") was applied for turbo code interleaving while for both fill bits modes, no optimized turbo code interleavers were used but random interleavers ("rand.IL").

Finally, it should be mentioned that the invention is not restricted to the specific embodiments and examples described above. That is, based on the above teachings, various modifications and variations of the invention may be carried out.

LIST OF SYMBOLS

A: the number of bits to be repeated or removed in the adjusting unit/step at the transmitting side is denoted |A|,

C: number of bits in the coded data block (including coded tail bits, if applicable), i.e. size (length) of the coded data block,

K: number of bits in the input data block, i.e. size (length) of the input data block,

M: target block size (length),

N: number of "fill bits",
r: coding rate of the channel encoder,
T: number of coded tail bits in coded data block.

## Claims

**1.** Rate matching method comprising the steps of:

- providing an input data block of K bits;
- channel encoding (22), at a given coding rate r, at least an uncoded data block comprising at least said K input bits, thereby creating a coded data block comprising C bits;
- adjusting (23), if C is not equal to a pre-specified target block size for coded data of M bits, the size of said coded data block by a number |M-C| of bits in order to obtain a rate-matched data block having said pre-specified target block size M;

**characterised in that**
said step of channel encoding comprises handling of varying uncoded data block sizes,
said method further comprising the step of:

- inserting (21), prior to channel encoding, a number N>0 of fill bits with predetermined values into said input data block,

whereby said uncoded data block further comprises said N fill bits;
said number N being dependent on at least said pre-specified target block size M.

**2.** Rate matching method according to claim 1, **characterised in that** said step of channel encoding " includes the steps of:

- generating (26) parity bits from said uncoded data block;
- generating systematic bits from said K bits of said input data block; and
- assembling (25) said coded data block based on, at least, said parity bits and said systematic bits.

**3.** Rate matching method according to claim 2, **characterised in that** said step of generating systematic bits in turn comprises the step of:

- removing (27), from said uncoded data block, said N fill bits inserted in said inserting step, thereby giving systematic bits identical to said K bits of said input data block.

**4.** Rate matching.method according to one of the claims 1 to 3, **characterised in that** said number N of fill bits is selected such that the size C of said coded data block is inferior to the sum of said pre-specified target block size M and the inverse 1/r of said coding rate r.

**5.** Rate matching method according to claim 4, **characterised in that** said number N of fill bits is selected such that the size C of said coded data block is inferior or equal to said pre-specified target block size M.

**6.** Rate matching method according to claim 1, **characterised in that** said number N of fill bits is essentially equal to N' = r*(M-T) - K, wherein T denotes a non-negative number of coded tail bits used for trellis termination.

**7.** Rate matching method according to claim 2 or 3, **characterised in that** said number N of fill bits is essentially equal to N' = (r*(M-T) - K) / (1-r)-,
wherein T denotes a non-negative number of coded tail bits used for trellis termination.

**8.** Rate matching method according to claim 6 or 7, **characterised in that** said number N of fill bits is equal to one of round{N'}, floor{N'}, and ceil{N'},
wherein floor{} denotes a flooring operation delivering the greatest integer value smaller than or equal to its argument and wherein ceil{} denotes a ceiling operation delivering the smallest integer value greater than or equal to its argument.

**9.** Rate matching method according to one of the claims 1 to 8, **characterised in that** said inserting step includes the steps of:

- grouping said fill bits into at least two groups,
- inserting at least two of said at least two groups at non-adjacent positions into said input data block.

**10.** Rate matching method according to one of the claims 1 to 9, **characterised in that** said inserting step includes the steps of:

- grouping said fill bits into at least three groups,
- inserting at least three of said at least three groups at essentially equidistant positions into said input data block.

**11.** Rate matching method according to claim 9 or 10, **characterised in that** the values of the fill bits of at least one of said groups are selected so as to enforce specific states in a trellis.

**12.** Decoding method, comprising the steps of:

- receiving a received data block comprising C soft values; and
- channel decoding (43) said received data block, thereby creating a decoded data block comprising at least K output bits;

**characterised in that**
said received data block being originated from a transmitter adapted to insert, according to claim 1, a number N>0 of fill bits;
said decoded data block further comprising decoded fill bits corresponding to said number N fill bits;
whereby said decoding method further comprising the step of:

- removing (44) said decoded fill bits from said decoded data block, thereby creating an output data block of said K output bits.

**13.** Decoding method according to claim 12, **characterised in that** said step of channel decoding comprises the steps of:

- disassembling (48) said received data block into, at least, a first group of soft values corresponding to systematic bits and a second group of soft values corresponding to parity bits;
- replacing (45) N soft values of said first group with N soft values representing the highest reliability level for each corresponding value of said N fill bits, thus generating a modified first group of soft values;
- soft input decoding (47) at least said modified first group of soft values and said second group of soft values, thereby creating said decoded data block.

**14.** Decoding method according to claim 12, **characterised in that** said received data block being originated from a transmitter adapted to insert, according to claim 2, a number N>0 of fill bits; whereby said step of channel decoding comprises the steps of:

- disassembling (48) said received data block into, at least, a first group of soft values corresponding to systematic bits and a second group of soft values corresponding to parity bits;
- inserting (46), into said first group of soft values, N soft values representing the highest reliability level for each corresponding value of said N fill bits, thus generating a modified first group of soft values;
- soft input decoding (47) at least said modified first group of soft values and said second group of soft values, thereby creating said decoded data block.

**15.** Rate matching apparatus comprising:

- means for providing an input data block of K bits;
- channel encoder (12) of a given coding rate r, arranged for encoding at least an uncoded data block comprising at least said K input bits, thereby creating a coded data block comprising C bits;
- adjusting unit (13), arranged for adjusting, if C is not equal to a pre-specified target block size for coded data of M bits, the size of said coded data block by a number |M-C| of bits in order to obtain a rate-matched data block having said pre-specified target block size M;

**characterized in that**
said channel encoder (12) being arranged for handling of varying uncoded data block sizes, said rate matching apparatus further comprising:

- a fill bits insertion unit (11) for inserting a number N>0 of fill bits with predetermined values into said input data block,

whereby said uncoded data block further comprises said N fill bits;
said number N being dependent on at least said pre-specified target block size M.

**16.** Rate matching apparatus according to claim 15, **characterised in that** said channel encoder (12) is adapted to execute the steps of:

- generating (26) parity bits from said uncoded data block;
- generating systematic bits from said K bits of said input data block; and
- assembling (25) said coded data block based on, at : least, said parity bits and said systematic bits.

**17.** Rate matching apparatus according to claim 16, **characterised in that** said channel encoder (12) is adapted to execute said step of generating systematic bits by removing (27), from said uncoded data block, said N fill bits inserted by said fill bits insertion unit, thereby giving systematic bits identical to said K bits of said input data block.

**18.** Rate matching apparatus according to one of the claims 15 to 17, **characterised in that** said number N' of fill bits is selected such that the size C of said coded data block is inferior to the sum of said pre-specified target block size M and the inverse 1/r of said coding rate r.

**19.** Rate matching apparatus according to claim 18, **characterised in that** said number N of fill bits is selected such that the size C of said coded data block is inferior or equal to said pre-specified target block size M.

**20.** Decoding apparatus comprising:

- means for receiving a data block comprising C soft values; and
- channel decoder (32) for decoding said received data block, thereby creating a decoded data block comprising at least K output bits;

**characterised in that**
said received data block being originated from a transmitter adapted to insert, according to claim 1, a number N>0 of fill bits;
said decoded data block further comprising decoded fill bits corresponding to said number N fill bits;
whereby said decoding apparatus further comprises:

- decoded fill bits removal unit (33) for removing said decoded fill bits from said decoded data block, thereby creating an output data block of said K output bits.

**21.** Decoding apparatus according to claim 20;
**characterised in that** said channel decoder is adapted to execute the steps of:

- disassembling (48) said received data block into; at least, a first group of soft values corresponding to systematic bits and a second group of soft values corresponding to parity bits;
- replacing (45) N soft values of said first group with N soft values representing the highest reliability level for each corresponding value of said N fill bits, thus generating a modified first group of soft values;
- soft input decoding (47) at least said modified first group of soft values and said second group of soft values, thereby creating said decoded data block.

**22.** Decoding apparatus according to claim 20, **characterised in that** said received data block being originated from a transmitter adapted to insert, according to claim 2, a number N>0 of fill bits;
whereby channel decoder is adapted to execute the steps of:

- disassembling (48) said received data block into, at least, a first group of soft values corresponding to systematic bits and a second group of soft values corresponding to parity bits;
- inserting (46), into said first group of soft values, N soft values representing the highest reliability level for each corresponding value of said N fill bits, thus generating a modified first group of soft values;
- soft input decoding (47) at least said modified first group of soft values and said second group of soft values, thereby creating said decoded data block.

23. Transceiver of a digital communication system, **characterised in that** said transceiver comprises means adapted to execute the steps of a rate matching method according to claim 1 as well as a decoding method according to claim 12.

24. Basestation of a digital mobile communication system **characterised by** at least one transceiver according to claim 23.

25. Computer program product directly loadable into an internal memory of a computer comprising software code portions for performing the steps of claim 1 and claim 12 when the product is run on the computer

**Patentansprüche**

1. Ratenanpassungsverfahren mit den folgenden Schritten:

Bereitstellen eines Eingangsdatenblocks von K Bits;
Kanal-Codieren (22) mindestens eines nicht codierten Datenblocks mit mindestens den K Eingangsbits mit einer gegebenen Codierrate r, wodurch ein codierter Datenblock mit C Bits erzeugt wird;
wenn C nicht gleich einer vorher festgelegten Ziel-Blockgröße für codierte Daten von M Bits ist, Anpassen (23) der Größe des codierten Datenblocks durch eine Anzahl |M - C| von Bits, um einen Datenblock mit angepaßter Rate mit der vorher festgelegten Ziel-Blockgröße M zu gewinnen;

**dadurch gekennzeichnet, daß**
der Kanal-Codierschritt, der die Bearbeitung veränderlicher nicht codierter Datenblockgrößen umfaßt;
wobei das Verfahren ferner den folgenden Schritt umfaßt:
vor der Kanal-Codierung, Einfügen (21) einer Anzahl N>0 von Füllbits mit vorbestimmten Werten in den Eingangsdatenblock,
wodurch der nicht codierte Datenblock außerdem die N Füllbits umfaßt;
wobei die Anzahl N mindestens von der vorher festgelegten Ziel-Blockgröße M abhängt.

2. Ratenanpassungsverfahren nach Anspruch 1, **dadurch gekennzeichnet, daß** der Kanal-Codierschritt die folgenden Schritte umfaßt:

Erzeugen (26) von Paritätsbits aus dem nicht codierten Datenblock;
Erzeugen von systematischen Bits aus den K Bits des Eingangsdatenblocks; und
Zusammenfügen (25) des codierten Datenblocks auf der Grundlage von mindestens der Paritätsbits und der systematischen Bits.

3. Ratenanpassungsverfahren nach Anspruch 2, **dadurch gekennzeichnet, daß** der Schritt des Erzeugens von systematischen Bits seinerseits den folgenden Schritt umfaßt:

Entfernen (27) der in dem Einfügeschritt eingefügten N Füllbits aus dem nicht codierten Datenblock, was systematische Bits ergibt, die mit den K Bits des Eingangsdatenblocks identisch sind.

4. Ratenanpassungsverfahren nach einem der Ansprüche 1 bis 3, **dadurch gekennzeichnet, daß** die Anzahl N von Füllbits so ausgewählt wird, daß die Größe C des codierten Datenblocks kleiner als die Summe aus der vorher festgelegten Ziel-Blockgröße M und dem Kehrwert 1/r der Codierrate r ist.

5. Ratenanpassungsverfahren nach Anspruch 4, **dadurch gekennzeichnet, daß** die Anzahl N von Füllbits so ausgewählt wird, daß die Größe C des codierten Datenblocks kleiner oder gleich der vorher festgelegten Ziel-Blockgröße M ist.

6. Ratenanpassungsverfahren nach Anspruch 1, **dadurch gekennzeichnet, daß** die Anzahl N von Füllbits im wesentlichen gleich $N' = r *(M - T) - K$ ist, wobei T eine nicht negative Anzahl von codierten Schlussbits bezeichnet, die zur Trellis-Termination verwendet werden.

7. Ratenanpassungsverfahren nach Anspruch 2 oder 3, **dadurch gekennzeichnet, daß** die Anzahl N von Füllbits im wesentlichen gleich $N' = (r * (M - T) - K) / (1 - r)$ ist, wobei T eine nicht negative Anzahl von codierten Schlussbits bezeichnet, die zur Trellis-Termination verwendet werden.

8. Ratenanpassungsverfahren nach Anspruch 6 oder 7, **dadurch gekennzeichnet, daß** die Anzahl N von Füllbits gleich einem der folgenden ist: round{N'}, floor{N'} und ceil{N'}, wobei floor{} eine Unterschranken-Operation bezeichnet, die den größten ganzzahligen Wert liefert, der kleiner oder gleich ihrem Argument ist, und wobei ceil{} eine Oberschranken-Operation bezeichnet, die den kleinsten ganzzahligen Wert liefert, der größer oder gleich ihrem Argument ist.

9. Ratenanpassungsverfahren nach einem der Ansprüche 1 bis 8, **dadurch gekennzeichnet, daß** der Einfügeschritt die folgenden Schritte einschließt:

   Gruppieren der Füllbits in mindestens zwei Gruppen;
   Einfügen von mindestens zwei der mindestens zwei Gruppen an nicht benachbarten Stellen in den Eingangsdatenblock.

10. Ratenanpassungsverfahren nach einem der Ansprüche 1 bis 9, **dadurch gekennzeichnet, daß** der Einfügeschritt die folgenden Schritte einschließt:

   Gruppieren der Füllbits in mindestens drei Gruppen;
   Einfügen von mindestens drei der mindestens drei Gruppen an im wesentlichen äquidistanten Stellen in den Eingangsdatenblock.

11. Ratenanpassungsverfahren nach Anspruch 9 oder 10, **dadurch gekennzeichnet, daß** die Werte der Füllbits von mindestens einer der Gruppen so ausgewählt werden, daß sie in einem Trellis spezifische Zustände erzwingen.

12. Decodierverfahren mit den folgenden Schritten:

   Empfangen eines Empfangsdatenblocks mit C weichen Werten; und
   Kanal-Decodieren (43) des Empfangsdatenblocks, wodurch ein decodierter Datenblock mit mindestens K Ausgangsbits erzeugt wird;

   **dadurch gekennzeichnet, daß**
   der Empfangsdatenblock von einem Transmitter ausgeht, der dafür eingerichtet ist, nach Anspruch 1 eine Anzahl $N > 0$ von Füllbits einzufügen;
   wobei der decodierte Datenblock ferner decodierte Füllbits umfaßt, die der Anzahl von N Füllbits entsprechen;
   wobei das Decodierverfahren ferner den folgenden Schritt umfaßt:

   Entfernen (44) der decodierten Füllbits aus dem decodierten Datenblock, wodurch ein Ausgangsdatenblock der K Ausgangsbits erzeugt wird.

13. Decodierverfahren nach Anspruch 12, **dadurch gekennzeichnet, daß** der Kanal-Decodierschritt die folgenden Schritte umfaßt:

   Auseinanderfügen (48) des Empfangsdatenblocks in mindestens eine erste Gruppe von weichen Werten, die systematischen Bits entsprechen, und eine zweite Gruppe von weichen Werten, die Paritätsbits entsprechen;
   Ersetzen (45) von N weichen Werten der ersten Gruppe durch N weiche Werte, die den höchsten Zuverlässigkeitsgrad für jeden entsprechenden Wert der N Füllbits darstellen, wodurch eine modifizierte erste Gruppe von weichen Werten erzeugt wird;
   weiches Eingangs-Decodieren (47) mindestens der modifizierten ersten Gruppe von weichen Werten und der zweiten Gruppe von weichen Werten, wodurch der decodierte Datenblock erzeugt wird.

14. Decodierverfahren nach Anspruch 12, **dadurch gekennzeichnet, daß** der Empfangsdatenblock von einem Transmitter ausgeht, der dafür eingerichtet ist, nach Anspruch 2 eine Anzahl N > 0 von Füllbits einzufügen; wobei der Kanal-Decodierschritt die folgenden Schritte umfaßt:

Auseinanderfügen (48) des Empfangsdatenblocks in mindestens eine erste Gruppe von weichen Werten, die systematischen Bits entsprechen, und eine zweite Gruppe von weichen Werten, die Paritätsbits entsprechen;
Einfügen (46) von N weichen Werten, die den höchsten Zuverlässigkeitsgrad für jeden entsprechenden Wert der N Füllbits darstellen, in die erste Gruppe von N weichen Werten, wodurch eine modifizierte erste Gruppe von weichen Werten erzeugt wird;
weiches Eingangs-Decodieren (47) mindestens der modifizierten ersten Gruppe von weichen Werten und der zweiten Gruppe von weichen Werten, wodurch der decodierte Datenblock erzeugt wird.

**15.** Ratenanpassungsvorrichtung aufweisend:

Mittel zur Bereitstellung eines Eingangsdatenblocks von K Bits;
einen Kanal-Codierer (12) mit einer gegebenen Codierrate r, der dafür angeordnet ist, mindestens einen nicht codierten Datenblock mit mindestens den K Eingangsbits zu codieren, wodurch ein codierter Datenblock mit C Bits erzeugt wird;
einer Anpassungseinheit (13), die dafür angeordnet ist, wenn C nicht gleich einer vorher festgelegten Ziel-Blockgröße für codierte Daten von M Bits ist, die Größe des codierten Datenblocks durch eine Anzahl |M - C| von Bits anzupassen, um einen Datenblock mit angepaßter Rate mit der vorher festgelegten Ziel-Blockgröße M zu erhalten;
**dadurch gekennzeichnet, daß**
der Kanal-Codierer (12) für eine Bearbeitung veränderlicher nicht codierter Datenblockgrößen angeordnet ist;

wobei die Ratenanpassungsvorrichtung ferner umfaßt:
eine Füllbit-Einfügeeinheit (11) zum Einfügen einer Anzahl N > 0 von Füllbits mit vorbestimmten Werten in den Eingangsdatenblock,
wodurch der nicht codierte Datenblock außerdem die N Füllbits umfaßt;
wobei die Anzahl N mindestens von der vorher festgelegten Ziel-Blockgröße abhängt.

**16.** Ratenanpassungsvorrichtung nach Anspruch 15, **dadurch gekennzeichnet, daß** der Kanal-Codierer (12) dafür eingerichtet ist, die folgenden Schritte auszuführen:

Erzeugen (26) von Paritätsbits aus dem nicht codierten Datenblock;
Erzeugen von systematischen Bits aus den K Bits des Eingangsdatenblocks; und
Zusammenfügen (25) des codierten Datenblocks auf der Grundlage von mindestens der Paritätsbits und der systematischen Bits.

**17.** Ratenanpassungsvorrichtung nach Anspruch 16, **dadurch gekennzeichnet, daß** der Kanal-Codierer (12) dafür eingerichtet ist, den Schritt des Erzeugens von systematischen Bits durch Entfernen (27) der durch die Einfügeeinheit eingefügten N Füllbits aus dem nicht codierten Datenblock auszuführen, was systematische Bits ergibt, die mit den K Bits des Eingangsdatenblocks identisch sind.

**18.** Ratenanpassungsvorrichtung nach einem der Ansprüche 15 bis 17, **dadurch gekennzeichnet, daß** die Anzahl N von Füllbits so ausgewählt wird, daß die Größe C des codierten Datenblocks kleiner als die Summe aus der vorher festgelegten Ziel-Blockgröße M und dem Kehrwert 1/r der Codierrate r ist.

**19.** Ratenanpassungsvorrichtung nach Anspruch 18, **dadurch gekennzeichnet, daß** die Anzahl N von Füllbits so ausgewählt wird, daß die Größe C des codierten Datenblocks kleiner oder gleich der vorher festgelegten Ziel-Blockgröße M ist.

**20.** Decodiervorrichtung aufweisend:

Mittel zum Empfangen eines Datenblocks mit C weichen Werten; und
einen Kanal-Decodierer (32) zum Decodieren des Empfangsdatenblocks, wodurch ein decodierter Datenblock mit mindestens K Ausgangsbits erzeugt wird;
**dadurch gekennzeichnet, daß**
der Empfangsdatenblock von einem Transmitter ausgeht, der dafür eingerichtet ist, nach Anspruch 1, eine Anzahl N > 0 von Füllbits einzufügen;
wobei der decodierte Datenblock ferner decodierte Füllbits umfaßt, die den N Füllbits entsprechen;
wobei die Decodiervorrichtung ferner umfaßt:
eine Entfernungseinheit für decodierte Füllbits (33) zum Entfernen der decodierten Füllbits aus dem decodierten Datenblock, wodurch ein Ausgangsdatenblock der K Ausgangsbits erzeugt wird.

**21.** Decodiervorrichtung nach Anspruch 20;
**dadurch gekennzeichnet, daß** der Kanal-Decodierer dafür eingerichtet ist, die folgenden Schritte auszuführen:

Auseinanderfügen (48) des Empfangsdatenblocks in mindestens eine erste Gruppe von weichen Werten, die systematischen Bits entsprechen, und eine zweite Gruppe von weichen Werten, die Paritätsbits entsprechen;
Ersetzen (45) von N weichen Werten der ersten Gruppe durch N weiche Werte, die den höchsten Zuverlässigkeitsgrad für jeden entsprechenden Wert der N Füllbits darstellen, wodurch eine modifizierte erste Gruppe von weichen Werten erzeugt wird;
weiches Eingangs-Decodieren (47) mindestens der modifizierten ersten Gruppe von weichen Werten und der zweiten Gruppe von weichen Werten, wodurch der decodierte Datenblock erzeugt wird.

**22.** Decodiervorrichtung nach Anspruch 20, **dadurch gekennzeichnet, daß** der Empfangsdatenblock von einem Transmitter ausgeht, der dafür eingerichtet ist, nach Anspruch 2 eine Anzahl N > 0 von Füllbits einzufügen; wobei der Kanal-Decodierer dafür eingerichtet ist, die folgenden Schritte auszuführen:

Auseinanderfügen (48) des Empfangsdatenblocks in mindestens eine erste Gruppe von weichen Werten, die systematischen Bits entsprechen, und eine zweite Gruppe von weichen Werten, die Paritätsbits entsprechen;
Einfügen (46) von N weichen Werten, die den höchsten Zuverlässigkeitsgrad für jeden entsprechenden Wert der N Füllbits darstellen, in die erste Gruppe von N weichen Werten, wodurch eine modifizierte erste Gruppe von weichen Werten erzeugt wird;
weiches Eingangs-Decodieren (47) mindestens der modifizierten ersten Gruppe von weichen Werten und der zweiten Gruppe von weichen Werten, wodurch der decodierte Datenblock erzeugt wird.

**23.** Senderempfänger eines digitalen Kommunikationssystems, **dadurch gekennzeichnet, daß** der Senderempfänger Mittel umfaßt, die dafür eingerichtet sind, die Schritte eines Ratenanpassungsverfahrens nach Anspruch 1 sowie eines Decodierverfahrens nach Anspruch 12 auszuführen.

**24.** Basisstation eines digitalen Mobilfunk-Kommunikationssystems, **gekennzeichnet durch** mindestens einen Senderempfänger nach Anspruch 23.

**25.** Computerprogramm-Produkt, das direkt in den internen Speicher eines Computers geladen werden kann, mit Software-Codeabschnitten zur Durchführung der Schritte aus Anspruch 1 und Anspruch 12, wenn das Produkt auf dem Computer ausgeführt wird.

## Revendications

**1.** Procédé d’adaptation de débit comprenant les étapes de :

fourniture d’un bloc de données d’entrée de K bits ;
codage de canal (22), à un débit de codage donné r, d’au moins un bloc de données non codées comprenant au moins lesdits K bits d’entrée, d’où ainsi la création d’un bloc de données codées qui comprend C bits ;
ajustement (23), si C n’est pas égal à une dimension de bloc cible préspécifiée pour des données codées de M bits, de la dimension dudit bloc de données codées avec un nombre |M-C| de bits afin d’obtenir un bloc de données à débit adapté présentant ladite dimension de bloc cible préspécifiée M,
**caractérisé en ce que**
ladite étape de codage de canal comprend la manipulation de dimensions de bloc de données non codées variables,
ledit procédé comprenant en outre l’étape de :
insertion (21), avant un codage de canal, d’un nombre N > 0 de bits de remplissage présentant des valeurs prédéterminées dans ledit bloc de données d’entrée,
et ainsi, ledit bloc de données non codées comprend en outre lesdits N bits de remplissage,

ledit nombre N dépendant au moins de ladite dimension de blocs cible préspécifiée M.

2. Procédé d'adaptation de débit selon la revendication 1, **caractérisé en ce que** ladite étape de codage de canal inclut les étapes de :

génération (26) de bits de parité à partir dudit bloc de données non codées ;
génération de bits systématiques à partir desdits K bits dudit bloc de données d'entrée ; et
assemblage (25) dudit bloc de données codées sur la base d'au moins lesdits bits de parité et lesdits bits systématiques.

3. Procédé d'adaptation de débit selon la revendication 2, **caractérisé en ce que** ladite étape de génération de bits systématiques comprend à son tour l'étape de :

enlèvement (27), au niveau dudit bloc de données non codées, desdits N bits de remplissage qui sont insérés au niveau de ladite étape d'insertion, d'où ainsi l'obtention de bits systématiques identiques auxdits K bits dudit bloc de données d'entrée.

4. Procédé d'adaptation de débit selon l'une des revendications 1 à 3, **caractérisé en ce que** ledit nombre N de bits de remplissage est sélectionné de telle sorte que la dimension C dudit bloc de données codées soit inférieure à la somme de ladite dimension de bloc cible préspécifiée M et de l'inverse 1/r dudit débit de codage r.

5. Procédé d'adaptation de débit selon la revendication 4, **caractérisé en ce que** ledit nombre N de bits de remplissage est sélectionné de telle sorte que la dimension C dudit bloc de données codées soit inférieure ou égale à ladite dimension de bloc cible préspécifiée M.

6. Procédé d'adaptation de débit selon la revendication 1, **caractérisé en ce que** ledit nombre N de bits de remplissage est essentiellement égal à $N' = r * (M-T) - K$, où T représente un nombre non négatif de bits de queue codés qui sont utilisés pour une terminaison de treillis.

7. Procédé d'adaptation de débit selon la revendication 2 ou 3, **caractérisé en ce que** ledit nombre N de bits de remplissage est essentiellement égal à $N' = (r * (M-T) - K)/(1-r)$, où T représente un nombre non négatif de bits de queue codés qui sont utilisés pour une terminaison de treillis.

8. Procédé d'adaptation de débit selon la revendication 6 ou 7, **caractérisé en ce que** ledit nombre N de bits de remplissage est égal à l'un de arrondi{N'}, floor{N'} et ceil{N'} où floor{} représente une opération de seuil inférieur qui délivre la valeur entière la plus grande qui est inférieure ou égale à son argument et où ceil{} représente une opération de seuil supérieur qui délivre la valeur entière la plus petite qui est supérieure ou égale à son argument.

9. Procédé d'adaptation de débit selon l'une des revendications 1 à 8, **caractérisé en ce que** ladite étape d'insertion inclut les étapes de :

groupage desdits bits de remplissage selon au moins deux groupes ; et
insertion d'au moins deux desdits au moins deux groupes en des positions non adjacentes dans ledit bloc de données d'entrée.

10. Procédé d'adaptation de débit selon l'une des revendications 1 à 9, **caractérisé en ce que** ladite étape d'insertion inclut les étapes de :

groupage desdits bits de remplissage selon au moins trois groupes ; et
insertion d'au moins trois desdits au moins trois groupes en des positions essentiellement équidistantes dans ledit bloc de données d'entrée.

11. Procédé d'adaptation de débit selon la revendication 9 ou 10, **caractérisé en ce que** les valeurs des bits de remplissage d'au moins l'un desdits groupes sont sélectionnées de manière à forcer des états spécifiques dans un treillis.

12. Procédé de décodage, comprenant les étapes de :

réception d'un bloc de données reçues comprenant C valeurs de logique douce ; et
décodage de canal (43) dudit bloc de données reçues, d'où ainsi la création d'un bloc de données décodées qui comprend au moins K bits de sortie,
**caractérisé en ce que**
ledit bloc de données reçues est originaire d'un transmetteur adapté pour insérer, selon la revendication 1, un nombre N > 0 de bits de remplissage,
ledit bloc de données décodées comprenant en outre des bits de remplissage décodés correspondant audit nombre N de bits de remplissage,
dans lequel, ledit procédé de décodage comprend en outre l'étape de :

enlèvement (44) desdits bits de remplissage décodés dudit bloc de données décodées, d'où ainsi la création d'un bloc de données de sortie desdits K bits de sortie.

**13.** Procédé de décodage selon la revendication 12, **caractérisé en ce que** ladite étape de décodage de canal comprend les étapes de :

désassemblage (48) dudit bloc de données reçues selon au moins un premier groupe de valeurs de logique douce correspondant à des bits systématiques et un second groupe de valeurs de logique douce correspondant à des bits de parité ;
remplacement (45) de N valeurs de logique douce dudit premier groupe par N valeurs de logique douce représentant le niveau de fiabilité le plus élevé pour chaque valeur correspondante desdits N bits de remplissage, d'où ainsi la génération d'un premier groupe modifié de valeurs de logique douce ; et
décodage d'entrée de logique douce (47) d'au moins ledit premier groupe modifié de valeurs de logique douce et ledit second groupe de valeurs de logique douce, d'où ainsi la création dudit bloc de données décodées.

**14.** Procédé de décodage selon la revendication 12, **caractérisé en ce que** ledit bloc de données reçues est originaire d'un transmetteur adapté pour insérer, conformément à la revendication 2, un nombre N > 0 de bits de remplissage ; dans lequel, ladite étape de décodage de canal comprend les étapes de :

désassemblage (48) dudit bloc de données reçues selon au moins un premier groupe de valeurs de logique douce correspondant à des bits systématiques et un second groupe de valeurs de logique douce correspondant à des bits de parité ;
insertion (46), dans ledit premier groupe de valeurs de logique douce, de N valeurs de logique douce représentant le niveau de fiabilité le plus élevé pour chaque valeur correspondante desdits N bits de remplissage, d'où ainsi la génération d'un premier groupe modifié de valeurs de logique douce ; et
décodage d'entrée de logique douce (47) d'au moins ledit premier groupe modifié de valeurs de logique douce et ledit second groupe de valeurs de logique douce, d'où ainsi la création dudit bloc de données décodées.

**15.** Appareil d'adaptation de débit comprenant :

un moyen pour fournir un bloc de données d'entrée de K bits ;
un codeur de canal (12) d'un débit de codage r donné, agencé pour coder au moins un bloc de données non codées comprenant au moins lesdits K bits d'entrée, d'où ainsi la création d'un bloc de données codées comprenant C bits ;
une unité d'ajustement (13) agencée pour ajuster, si C n'est pas égal à une dimension de bloc cible préspécifiée pour des données codées de M bits, la dimension dudit bloc de données codées selon un nombre | M-C | de bits afin d'obtenir un bloc de données à débit adapté présentant ladite dimension de bloc cible préspécifiée M,
**caractérisé en ce que** :

ledit codeur de canal (12) est agencé pour manipuler dimensions de bloc de données non codées variables, ledit appareil d'adaptation de débit comprenant en outre :
une unité d'insertion de bits de remplissage (11) pour insérer un nombre N > 0 de bits de remplissage présentant des valeurs prédéterminées dans ledit bloc de données d'entrée,
et ainsi, ledit bloc de données non codées comprend en outre lesdits N bits de remplissage,
ledit nombre N dépendant au moins de ladite dimension de bloc cible préspécifiée M.

**16.** Appareil d'adaptation de débit selon la revendication 15, **caractérisé en ce que** ledit codeur de canal (12) est adapté pour exécuter les étapes de :

génération (26) de bits de parité à partir dudit bloc de données non codées ;
génération de bits systématiques à partir desdits K bits dudit bloc de données d'entrée ; et
assemblage (25) dudit bloc de données codées sur la base d'au moins lesdits bits de parité et lesdits bits systématiques.

**17.** Appareil d'adaptation de débit selon la revendication 16, **caractérisé en ce que** ledit codeur de canal (12) est adapté pour exécuter ladite étape de génération de bits systématiques en enlevant (27), au niveau dudit bloc de données non codées, lesdits N bits de remplissage qui sont insérés par ladite unité d'insertion de bits de remplissage, d'où ainsi l'obtention de bits systématiques qui sont identiques auxdits K bits dudit bloc de données d'entrée.

**18.** Appareil d'adaptation de débit selon l'une des revendications 15 à 17, **caractérisé en ce que** ledit nombre N de bits de remplissage est sélectionné de telle sorte que la dimension C dudit bloc de données codées soit inférieure à la somme de ladite dimension de bloc cible préspécifiée M et de l'inverse 1/r dudit débit de codage r.

**19.** Appareil d'adaptation de débit selon la revendication 18, **caractérisé en ce que** ledit nombre N de bits de remplissage est sélectionné de telle sorte que la dimension C dudit bloc de données codées soit inférieure ou égale à ladite dimension de bloc cible préspécifiée M.

**20.** Appareil de décodage comprenant :

un moyen pour recevoir un bloc de données comprenant C valeurs de logique douce ; et
un décodeur de canal (32) pour décoder ledit bloc de données reçues, d'où ainsi la création d'un bloc de données décodées comprenant au moins K bits de sortie,
**caractérisé en ce que**
ledit bloc de données reçues est originaire d'un transmetteur qui est adapté pour insérer, selon la revendication 1, un nombre N > 0 de bits de remplissage ;
ledit bloc de données décodées comprenant en outre des bits de remplissage décodés correspondant audit nombre N de bits de remplissage,
dans lequel, ledit appareil de décodage comprend en outre :

une unité d'enlèvement de bits de remplissage décodés (33) pour enlever lesdits bits de remplissage décodés dudit bloc de données décodées, d'où ainsi la création d'un bloc de données de sortie desdits K bits de sortie.

**21.** Appareil de décodage selon la revendication 20, **caractérisé en ce que** ledit décodeur de canal est adapté pour exécuter les étapes de :

désassemblage (48) dudit bloc de données reçues selon au moins un premier groupe de valeurs de logique douce correspondant à des bits systématiques et un second groupe de valeurs de logique douce correspondant à des bits de parité ;
remplacement (45) de N valeurs de logique douce dudit premier groupe par N valeurs de logique douce représentant le niveau de fiabilité le plus élevé pour chaque valeur correspondante desdits N bits de remplissage, d'où ainsi la génération d'un premier groupe modifié de valeurs de logique douce ;
décodage d'entrée de logique douce (47) d'au moins ledit premier groupe modifié de valeurs de logique douce et ledit second groupe de valeurs de logique douce, d'où ainsi la création dudit bloc de données décodées.

**22.** Appareil de décodage selon la revendication 20, **caractérisé en ce que** ledit bloc de données reçues est originaire d'un transmetteur qui est adapté pour insérer, selon la revendication 2, un nombre N > 0 de bits de remplissage, dans lequel le décodeur de canal est adapté pour exécuter les étapes de :

désassemblage (48) dudit bloc de données reçues selon au moins un premier groupe de valeurs de logique douce correspondant à des bits systématiques et un second groupe de valeurs de logique douce correspondant à des bits de parité ;
insertion (46), dans ledit premier groupe de valeurs de logique douce, de N valeurs de logique douce représentant le niveau de fiabilité le plus élevé pour chaque valeur correspondante desdits N bits de remplissage, d'où ainsi la génération d'un premier groupe modifié de valeurs de logique douce ;
décodage d'entrée de logique douce (47) d'au moins ledit premier groupe modifié de valeurs de logique douce et ledit second groupe de valeurs de logique douce, d'où ainsi la création dudit bloc de données décodées.

23. Emetteur-récepteur d'un système de communication numérique, **caractérisé en ce que** ledit émetteur-récepteur comprend un moyen adapté pour exécuter les étapes d'un procédé d'adaptation de débit selon la revendication 1 de même que d'un procédé de décodage selon la revendication 12.

24. Station de base d'un système de communication mobile numérique **caractérisée par** au moins un émetteur-récepteur selon la revendication 23.

25. Produit de programme d'ordinateur directement chargeable dans une mémoire interne d'un ordinateur comprenant des parties de code de logiciel pour réaliser les étapes de la revendications 1 et de la revendication 12 lorsque le produit est déroulé sur l'ordinateur.

FIG. 1

2
4
1
3
MT
BS
PSTN

FIG. 2

5
1,3
6
7
8
9
10

FIG 3a
Fill bits "mode a" (transmitter)
input data block
(K bits)
11
Fill bits
insertion
unit
+N bits
uncoded
data block
(K+N bits)
12
Channel
Encoder
coding
rate r
coded
data block
(C bits)
13
Adjusting
unit
(optional)
+A bits
rate-matched
data block
(M bits)
14
Interleaver
M bits

# FIG. 3b

Fill bits "mode a"

input data block (K bits)
21
insert N>0 fill bits
uncoded data block (K+N bits)
22
channel encoding at coding rate r
coded data block (C bits)
C=M ?
yes
no
23
adjust size by |A|=|M-C| bits
·for C<M : repeat M-C bits
·for C>M : remove C-M bits
rate-matched data block (M bits)
end

FIG 4a
Fill bits "mode b" (transmitter)
input data block
(K bits)
11
Fill bits
insertion
unit
+N bits
uncoded
data block
(K+N bits)
12
Channel encoder: Turbo Coder
15
TC-
interl.
Fill bits
removal unit
17
1st constituent
encoder
2nd constituent
encoder
16
coded
data block
(C bits)
13
Adjusting
unit
(optional)
+A bits
rate-matched
data block
(M bits)

# FIG. 4b

Fill bits "mode b"

input data block (K bits)
insert N>0 fill bits
21
uncoded data block (K+N bits)
channel encoding
at coding rate r
27
26
remove fill bits
generate parity bits
22
modified
systematic bits
assemble coded data block
25
coded data block (C bits)
C=M ?
yes
no
adjust size by |A|=|M-C| bits
·for C<M : repeat M-C bits
·for C>M : remove C-M bits
23
rate-matched data block (M bits)
end

Fill bits "mode b" (transmitter)
input data block (K bits)
Channel encoder
18
Fill bits insertion unit +Nbits
uncoded data block (K+N bits)
D
D
D
12
19
coded data block (C bits)
13
Adjusting unit (optional) +A bits
rate-matched data block (M bits)

FIG 5a

FIG. 5b
Fill bits "mode b"
input data block (K bits)
channel encoding
at coding rate r
28
insert N>0 fill bits
uncoded data block (K+N bits)
22
29
generate parity bits
assemble coded data block
25
coded data block (C bits)
C=M ?
yes
no
adjust size by |A|=|M-C| bits
·for C<M : repeat M-C bits
·for C>M : remove C-M bits
23
rate-matched data block (M bits)
end

FIG 6a
Fill bits "mode a" (receiver)
31
32
33
34
demodulated data block (M soft values)
Deinterleaver
deinterleaved data block (M soft values)
(De)adjusting unit
(optional)
-A soft val.
dematched data block (C soft values)
Channel decoder
decoded data block (K+N bits)
Decoded fill bits removal unit
output data block (K bits)
Channel decoder
35
37
Soft values replacement unit
38
dematched data block (C soft values)
Soft input decoder
decoded data block (K+N bits)

FIG. 6b
Fill bits "mode a"

deinterleaved data block (M soft values)
M=C?
yes
no
(de)adjust size by |A|=|M-C| soft values
·M>C : soft value combining
·M<C : insert "don't know" soft values
42
dematched data block (C soft values)
channel decoding
43
decoded data block (K+N bits)
remove decoded fill bits
44
output data block (K bits)
end
dematched data block (C soft values)
Channel decoding
disassemble
systematic soft values
45
48
parity soft values
replace soft values
47
soft input decoding
43
decoded data block (K+N bits)

deinterleaved
data block
(M soft values)
32
(De)adjust-
ing unit
(optional)
-A soft val.
dematched
data block
(C soft values)
33
Channel decoder
38
36
Soft values
insertion unit
37
Soft
input
decoder
decoded
data block
(K+N bits)
34
Decoded fill
bits removal
unit
output
data block
(K bits)

FIG 7a

Fill bits "mode b" (receiver)

FIG. 7b
Fill bits "mode b"
deinterleaved data block (M soft values)
M=C?
yes
no
42
(de)adjust size by |A|=|M-C| soft values
·M>C : soft value combining
·M<C : insert "don`t know" soft values
dematched data block (C soft values)
channel decoding
disassemble
48
systematic soft values
parity soft values
46
insert soft values
43
47
soft input decoding
decoded data block (K+N bits)
44
remove decoded fill bits
output data block (K bits)
end

FIG 8
UL Packet UDD 144,
Vehicular A (120 km/h)
WCDMA UL UDD 144 Vehicular A 120 km/h, turbo coding, nominal SNR
BER(-) / BLER (--)
$10^0$
$10^{-1}$
$10^{-2}$
$10^{-3}$
$10^{-4}$
$10^{-5}$
1
1.5
2
2.5
3
3.5
4
4.5
5
$E_b/N_0$ per antenna branch [dB]
conv. rate matching
mode a) (92 fill bits)
mode b) (138 fill bits)

FIG 9

DL Packet (ETSI Phase 2), 64 kbit/s, 80 ms interleaving, Pedestrian B (3 km/h)

Pedestrian B 3 km/h, 64 kb/s, 80 ms, CL=4, Dec.It=4
BER(-) / BLER (--)
$10^0$
$10^{-1}$
$10^{-2}$
$10^{-3}$
$10^{-4}$
$10^{-5}$
$10^{-6}$
$10^{-7}$
2
2.5
3
3.5
4
4.5
5
$E_b/N_0$ [dB]
conv. rate match. (MIL)
mode a) (bl.length= 1, rand.IL1)
mode a) (bl.length= 1, rand.IL2)
mode a) (bl.length= 3, rand.IL2)
mode a) (bl.length= 15, rand.IL2)
mode b) (bl.length= 1, rand.IL2)

FIG 10 Prior Art

a) transmitter
input data block
(K bits)
Channel encoder
coding rate r
coded data block
(C bits)
Rate Matcher
+A bits
rate-matched data block
(M bits)
Interleaver
interleaved data block
(M bits)
Modulator
b) receiver
Demodulator/ Equalizer
demodulated data block
(M soft values)
Deinterleaver
deinterleaved data block
(M soft values)
Rate (De)matcher
-A bits
dematched data block
(C soft values)
Channel Decoder
output data block
(K bits)